(19) **Europäisches Patentamt**
**European Patent Office**
**Office européen des brevets**

(11) **EP 2 870 651 B1**

(12) **EUROPEAN PATENT SPECIFICATION**

(45) Date of publication and mention
of the grant of the patent:
**27.04.2016 Bulletin 2016/17**

(21) Application number: **12762318.9**

(22) Date of filing: **05.07.2012**

(51) Int Cl.:
**H01M 8/04** *(2006.01)*    **H01M 8/10** *(2006.01)*

(86) International application number:
**PCT/FI2012/050709**

(87) International publication number:
**WO 2013/156666 (24.10.2013 Gazette 2013/43)**

(54) **METHOD AND ARRANGEMENT FOR DETERMINATION OF LEAKAGE LEVELS IN FUEL CELL SYSTEM**

VERFAHREN UND ANORDNUNG ZUR BESTIMMUNG DER LECKSTÄNDE IN BRENNSTOFFZELLENSYSTEM

PROCÉDÉ ET AGENCEMENT POUR LA DÉTERMINATION DE NIVEAUX DE FUITE DANS UN SYSTÈME DE PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2015 Bulletin 2015/20**

(73) Proprietor: **Convion Oy**
**02150 Espoo (FI)**

(72) Inventors:
• **ÅSTRÖM, Kim**
**FI-02460 Kirkkonummi (FI)**
• **HAKALA, Tuomas**
**FI-00330 Helsinki (FI)**

• **HOTTINEN, Tero**
**FI-08680 Lohja (FI)**
• **KORHONEN, Topi**
**FI-02750 Espoo (FI)**

(74) Representative: **LEITZINGER OY**
**Tammasaarenkatu 1**
**00180 Helsinki (FI)**

(56) References cited:
**EP-A2- 2 237 352      JP-A- 2003 173 805**
**US-A1- 2007 207 355      US-A1- 2009 047 553**
**US-B1- 7 127 937**

**Description**

**The field of the invention**

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed.

Fuel cell's, by means of which energy of fuel, for example biogas, is directly converted to electricity via a chemical reaction in an environmentally friendly process, are promising future energy conversion devices.

**The state of the art**

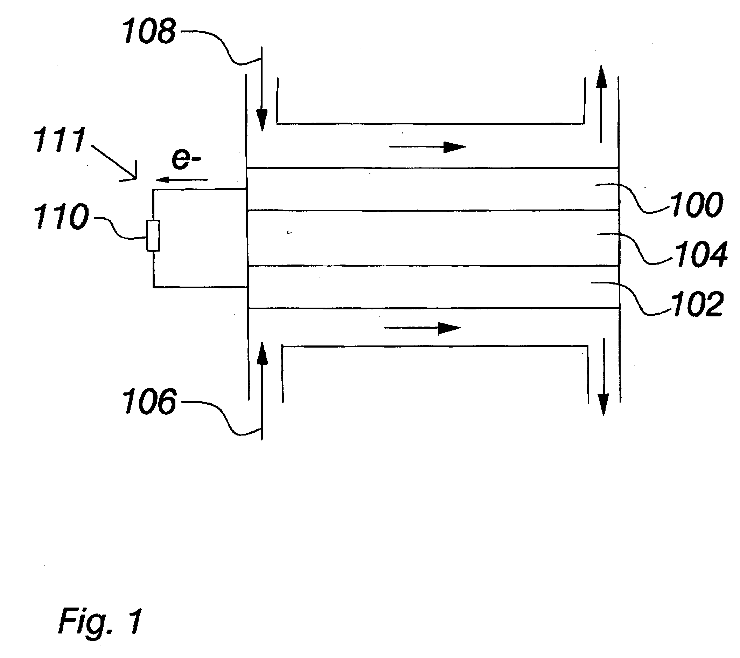

Fuel cell, as presented in fig 1, comprises an anode side 100 and a cathode side 102 and an electrolyte material 104 between them. In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with fuel 108 producing water and also typically carbon dioxide ($CO_2$). Between anode 100 and cathode 102 is an external electric circuit 111 comprising a load 110 for the fuel cell.

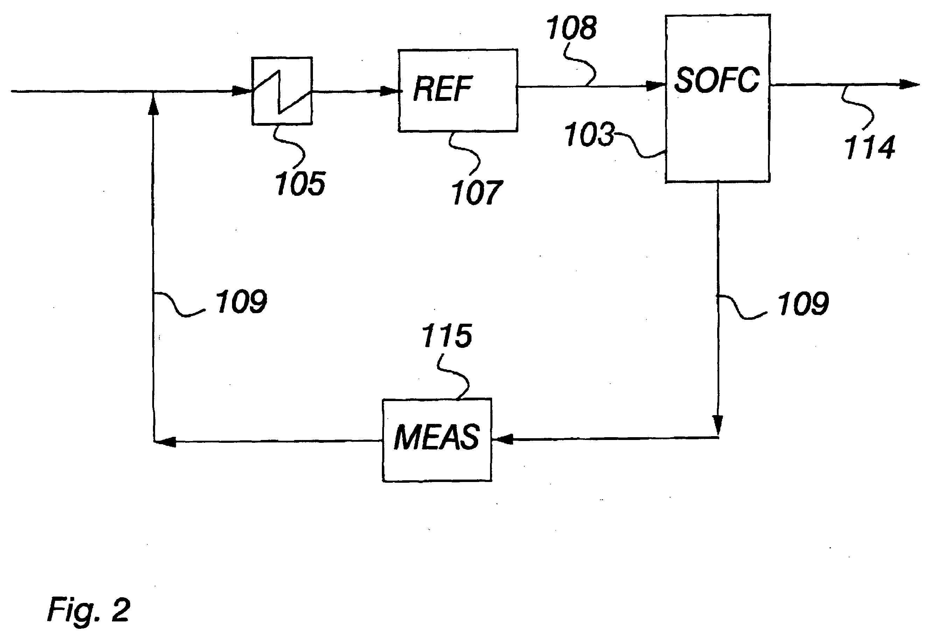

In figure 2 is presented a SOFC device as an example of a high temperature fuel cell device. SOFC device can utilize as fuel for example natural gas, bio gas, methanol or other compounds containing hydrocarbons. SOFC device in figure 2 comprises more than one, typically plural of fuel cells in stack formation 103 (SOFC stack). Each fuel cell comprises anode 100 and cathode 102 structure as presented in figure 1. Part of the used fuel can be recirculated in feedback arrangement 109 through each anode. SOFC device in fig 2 also comprises fuel heat exchanger 105 and reformer 107. Typically several heat exchangers are used for controlling thermal conditions at different locations in a fuel cell process. Reformer 107 is a device that converts the fuel such as for example natural gas to a composition suitable for fuel cells, for example to a composition containing hydrogen and methane, carbon dioxide, carbon monoxide and inert gases. Anyway in each SOFC device it is though not necessary to have a reformer.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device is an electrochemical conversion device that produces electricity directly from oxidizing fuel. Advantages of SOFC device include high efficiencies, long term stability, low emissions, and cost. The main disadvantage is the high operating temperature which results in long start up and shutdown times and in both mechanical and chemical compatibility issues.

Natural gases such as methane and gases containing higher carbon compounds are typically used as fuels in SOFCs, which gases, however, have to be preprocessed before feeding to the fuel cells to prevent coking, i.e. formation of harmful carbon compounds such as for example coke, fly dust, tar, carbonate and carbide compounds. These different forms of carbon can be in this context called as general term being harmful carbon compounds.

Hydrocarbons go through a thermal or catalytic decomposition in the formation of harmful carbon compounds. The produced compound can adhere to the surfaces of the fuel cell device and adsorbs on catalysts, such as nickel particles. The harmful carbon compound produced in the coking coats some of the active surface of the fuel cell device, thus significantly deteriorating the reactivity of the fuel cell process. The harmful carbon compounds may even completely block the fuel passage.

Preventing formation of harmful carbon compounds is, therefore, important for ensuring a long service life for the fuel cells. The prevention of formation of harmful carbon compounds also saves catalysts that are the substances (nickel, platinum, etc) used in fuel cells for accelerating chemical reactions. Gas pre-processing requires water, which is supplied to the fuel cell device. The water produced in combining the oxygen ion and the fuel, i.e. the gas on the anode 100 side, can also be used in the pre-processing of the gas.

The single pass SOFC fuel utilization (FU) and oxygen-to-carbon ratio (OC) are critical parameters in SOFC system control. Exceeding the limit values for FU and OC increase the degradation and/or damage immediately the SOFC system e.g. by coking. However, small safety margins are desirable for FU and OC to maximize system efficiency, reduce unnecessary high fuel recycling and reduce unnecessary steam flow to fuel system.

In determination of FU and OC accurately in process control, the hydrocarbon (such as methane, $CH_4$, and higher hydrocarbons) concentration in fuel needs to be known. In biogas applications this is problematic since $CH_4$ concentration varies, but accurate on-line $CH_4$ concentration measurement devices are too expensive for commercial SOFC systems. Similarly in natural gases the amount of CH4 and also that of higher hydrocarbons may vary, causing a similar problem. In one prior art embodiment type, which is in use e.g. in Wartsila New Energy unit running on a landfill gas, the measured variation of CH4 fraction in the fuel has been 30-45%. The accuracy of a suitable and adequately inexpensive CH4 measurement device is typically only 4 %-units since the calibration tends to drift during a long usage. The 4 %-unit error in CH4 concentration as such means about 10 %-unit error in calculated FU (fuel utilization).

SOFC stacks are structurally such, that there is always some kind of leak between different gases. The leaks may be internal from anode side to cathode side, or from cathode side to anode side, or external from either of the anode side or cathode side or from both of said sides. All of these leakages affect the thermal balances of the system and also the compositions of flows. Hence, these have also an effect for the system sizing, operation, and control. For sizing purposes typically a rough estimate is adequate, but for operation and control it is important to have more accurate understanding and information on the overall system leakage level, and also from where and to where the leaks take place. Especially for anode recirculation loop control it is very beneficial to quantify the leakage rates.

**Short description of the invention**

The object of the invention is to accomplish an advanced control for fuel cell system operation, which control does not suffer from any error effects caused by leakages inside the fuel cell system. This is achieved by an arrangement for determination of leakage levels in a fuel cell system, each fuel cell in the fuel cell system comprising an anode side, a cathode side, and an electrolyte between the anode side and the cathode side, and the fuel cell system comprising means for feeding fuel to the fuel cell system, means for obtaining fuel cell current information and an afterburner for performing burning of residual gas from the anode side. The arrangement comprises means for measuring temperature in the afterburner or substantially near the afterburner to form afterburner temperature change information, means for determining information on consumed oxygen amount and on consumed fuel amount in the fuel cells on the basis of the current information, means for determining information on air amount in the afterburner, means for determining residual enthalpy change information on the basis of said afterburner temperature change information, said information on air amount in the afterburner, and on the basis of said information on consumed fuel amount in the fuel cells, first information means for obtaining at least one of fuel input enthalpy information and fuel input concentration information on the basis of the determined residual enthalpy change information, the first information means being configured to determine first methane content information of the fuel feed by utilizing said obtained at least one of fuel input enthalpy information and fuel input concentration information, and the arrangement comprises means for controlling input of the fuel cell system on the basis of the first methane content information determined by the first information means, second information means for providing enthalpy balance information of the fuel cell system on the basis of information of enthalpy flows accomplished by utilizing enthalpy feed in flow information provided by one or more of following means: means for performing air feed in measurements to form air feed in information, means for performing water flow in measurements to form water flow in information, means for providing exhaust feed out information, means for measuring to form electrical power production information, means for measuring to form heating information of the fuel cell system, and means for determining heat loss information of the fuel cell system, and the arrangement comprises the second information means for determining enthalpy balance of the fuel cell system by detecting that sum of summed information of enthalpy flows is zero or essentially near to zero, the second information means being configured to determine second methane content information of the fuel feed on the basis of said provided enthalpy balance information, and the arrangement comprises means for determining leakage level information of the fuel cell system on the basis of differences between the first and second methane content information, and said means for performing more accurate control of the fuel cell system on the basis of said determined leakage level information.

The focus of the invention is also a method to determine leakage levels in a fuel cell system, in which method is fed fuel to the fuel cell system, is obtained fuel cell current information, and is burnt residual gas from the anode side in an afterburner. In the method is measured temperature in the afterburner or substantially near the afterburner to form afterburner temperature change information, is determined information on consumed oxygen amount and on consumed fuel amount in the fuel cells on the basis of the current information, is determined information on air amount in the afterburner, is determined residual enthalpy change information on the basis of said afterburner temperature change information, said information on air amount in the afterburner, and on the basis of said information on consumed fuel amount in the fuel cells, is obtained at least one of fuel input enthalpy information and fuel input concentration information on the basis of the determined residual enthalpy change information, and in the method is determined first methane content information of the fuel feed by utilizing said obtained at least one of fuel input enthalpy information and fuel input concentration information, is controlled input of the fuel cell system on the basis of the first methane content information, is formed enthalpy feed in flow information from information gained by performing one or more of following method steps: is performed air feed in measurements to form air feed in information, is performed water flow in measurements to form water flow in information, is measured exhaust feed out to form exhaust feed out information, is measured electrical power to form electrical power production information, is measured temperature conditions to form heating information of the fuel cell system, and is formed heat loss information of the fuel cell system, and on the basis of the formed enthalpy feed in flow information is accomplished information of enthalpy flows to provide enthalpy balance information of the fuel cell system by summing information of enthalpy flows, and by detecting that sum of summed information of enthalpy flows is zero or essentially near to zero, second methane content information of the fuel feed being determined on the basis of the provided enthalpy balance information, and in the method is determined leakage level information of the fuel cell system on the basis of differences between the first and second methane content information, and is performed more accurate control of the fuel cell system on the basis of said determined leakage level information.

The invention is based on utilizing in fuel cell system control difference information between first and second methane content information, the first methane content information being formed based on afterburner operation measurements, and the second methane content information being formed based on fuel cell system enthalpy balance information.

The benefit of the invention is that cost effective measurement technology can be utilized for determining good estimates for methane i.e. CH4 concentration. Most of the measurements are in practice easy as no substantially hot gas flows need to be measured in embodiments according to the present invention. As a result of the invention leakage levels can be determined, which enables more accurate control of the fuel cell system.

## Short description of figures

Figure 1     presents a single fuel cell structure.

Figure 2     presents an example of a SOFC device.

Figure 3     presents examples of sensitivity measurement results in an embodiment according to the invention.

Figure 4     presents a preferred embodiment according to the present invention.

Figure 5     presents a preferred microcalorimeter setup according to the present invention.

Figure 6     is a first complementary figure to the preferred embodiment of figure 4 according to the present invention.

Figure 7     is a second complementary figure to the preferred embodiment of figure 4 according to the present invention.

## Detailed description of the invention

Solid oxide fuel cells (SOFCs) can have multiple geometries. The planar geometry (Fig. 1) is the typical sandwich type geometry employed by most types of fuel cells, where the electrolyte 104 is sandwiched in between the electrodes, anode 100 and cathode 102. SOFCs can also be made in tubular geometries where for example either air or fuel is passed through the inside of the tube and the other gas is passed along the outside of the tube. This can be also arranged so that the gas used as fuel is passed through the inside of the tube and air is passed along the outside of the tube. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated at temperatures ranging from 600 to 1,000 °C. Reduction of oxygen 106 (Fig. 1) into oxygen ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane and some amounts of higher hydrocarbons), different biogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation, i.e. coking caused by higher hydrocarbons. This water can be provided internally by circulating the anode gas exhaust flow, because water is produced in excess amounts in fuel cell reactions, and/or said water can be provided with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water.

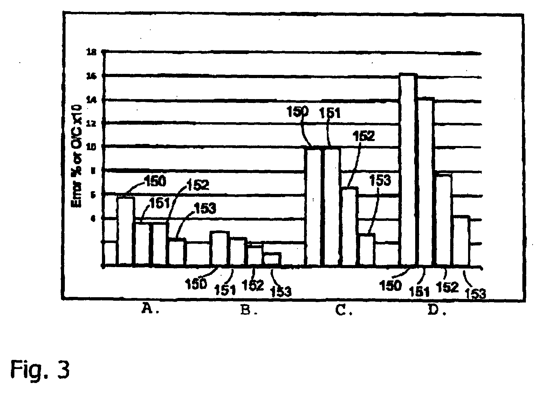

In embodiments according to the present invention a change in enthalpy of remaining fuel gas coming from anode can be utilized to detect changes in the enthalpy of fuel feed-in. These enthalpy changes may rise from changes e.g. in gas composition or flow sensor drifting. The anode exhaust's enthalpy change can be rather easily monitored by the temperature change over an afterburner if the afterburner unit is situated as a separate component whose air flow can be controlled. If the after burner unit is situated in the downstream of the stacks in a way that whole air flow is fed through it, then the enthalpy change may be monitored with adequate accuracy by sampling a small portion of the anode exhaust gas. This could be accomplished e.g. with a microcalorimeter setup presented in attached schematic, where an ejector sucks the required flows into the catalyst chamber, miniature catalyst burns the sampled fuel, and based on known ejector flow properties and measured pressure level of the afterburner and temperature change, the change in enthalpy of remaining fuel can be calculated. Based on sensitivity calculations, the method according to the present invention allows significant decrease (see figure 3) in required accuracy of feed-in flow and composition information. Furthermore in some advanced future embodiments need of feed-in flow and/or composition information can be even totally avoided.

In figure 3 is presented examples of sensitivity measurement results in an embodiment according to the invention. Case A shows recycle ratio error percents, case B shows O/C*10 results, case C shows system fuel utilization results, and case D shows single pass fuel utilization results. Reference sign 150 refers to a situation where there exists no residual enthalpy correction with fuel cell system leakage errors. Reference sign 151 refers to a situation where there exists no residual enthalpy correction, and also no fuel cell system leakage errors. Reference sign 152 refers to a situation where there exists residual enthalpy correction with fuel cell system leakage errors. Reference sign 153 refers to a situation where there exists residual enthalpy correction, and no fuel cell system leakage errors. These diagrams shows for example that worst case errors in critical control factors can be even eliminated -50% compared to prior art system, when there exists considerable leakage errors in the fuel cell system. Also when there exists no uncertainty in leakage values, said elimination can be about -30%.

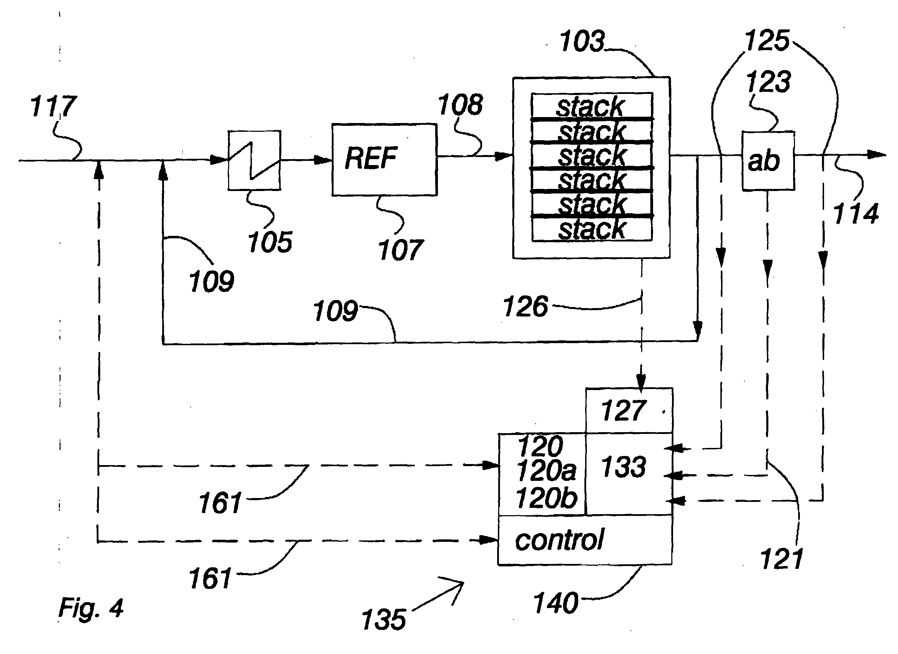

In figure 4 is presented an arrangement according to the present invention for determining residual enthalpy change of a fuel cell system, which comprises means 117 for feeding fuel to the fuel cell system and means 109 for performing anode side 100 recirculation 109 of the gas used as fuel. The means 117 can be arranged for example by prior art fuel feed system comprising a fuel source and a pipe line through which fuel is fed into the fuel cell system. The means 109 are not necessary in implementing the arrangement and method according to the invention, i.e. the present invention can also be implemented and utilized in a fuel cell system, which does not comprise recirculation of the anode side 100 gas. The fuel cell system comprises an afterburner 123 for performing burning of residual gas from the anode sides 100, i.e. in figure 4 the fuel cell system comprises an afterburner 123 for performing burning of residual gas from the anode sides. The fuel cell system also comprises means 126 for obtaining fuel cell current information 103. This preferably means total current information of all fuel cell stacks 103, which information can be obtained for example by known current or voltage measurement device.

The arrangement according to the present invention comprises means 125 for measuring temperature from the gas flow preferably just before the afterburner 123 and just after the afterburner 123, as the figure 4 schematically shows. Afterburner temperature information is formed from said temperature measurements, and on the basis of said temperature information can be calculated afterburner temperature change information. The arrangement comprises means 127 for determining information on burnt, i.e. consumed fuel amount in the fuel cells 103 on the basis of said formed current information. The means 127 are preferably processor means locating for example in a computer unit 135, which is presented in figure 4. The arrangement further comprises means for determining information on air amount in the afterburner 123. For example, when an ejector is used for air feed in to the afterburner said air amount information can be determined on the basis of ejector nozzle 138 (Fig. 4) diameter information for example in a processor based calculation in the computer unit 135.

Means 133 of the present invention are for determining residual enthalpy change information on the basis of said afterburner temperature change information, said information on air amount in the afterburner, and on the basis of said information on consumed fuel amount in the fuel cells 103. The arrangement further comprises means 120a for obtaining at least one of fuel input enthalpy information and fuel input concentration information on the basis of the determined residual enthalpy change information. The means 120a utilize the obtained fuel input enthalpy information and/or the obtained fuel input concentration information to control at least one of fuel utilization (FU) and oxygen to carbon (O/C) ratio in the fuel cell system. The arrangement can be configured to determine more adjusted methane content information of the fuel feed 117 by the means 120a for a more accurate control of at least one of fuel utilization (FU) and oxygen to carbon ratio (O/C) in the fuel cell system. The controlling of at least one of fuel utilization (FU) and oxygen to carbon ratio (O/C) is performed for example so that the means 120a give a control command via a control line 161 (wired or wireless), and the fuel cell system changes at least one of its operation factors (air amount, water amount, temperature, fuel cell voltage, etc) according to the control command.

The fuel cell system presented in figure 4 also comprises means 121 for measuring afterburner 123 pressure to form pressure level information of the afterburner. Pressure level information is useful in some preferred embodiments of the invention, but it is not necessary in implementing the arrangement and method according to the invention.

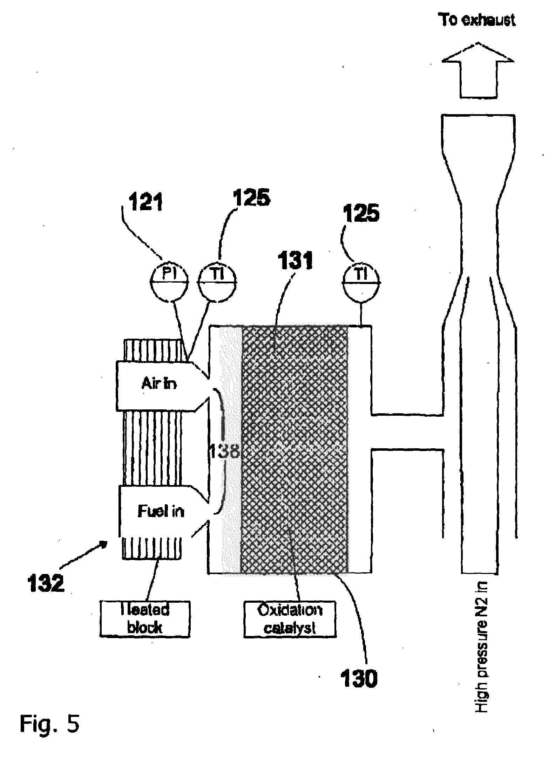

In figure 5 is presented a preferred microcalorimeter setup according to the present invention as the means 133 for determining residual enthalpy change information. The microcalorimeter setup comprises an at least one ejector 132 for sucking, by achieving required pressure state over at least one critical opening 138, a required gas flow from the anode side 100 gas flow into a catalyst chamber 130, and also a required air flow from an air source into said catalyst chamber 130, to form a gas sample. Oxidant is also sucked into the catalyst chamber 130 in a known, i.e. determined, proportion to the gas sample flow. The ejector 132 comprises an ejector nozzle 138, i.e. a critical opening 138 through which said required gas amount flows, and preferably the ejector 132 comprises also another critical opening 138 through which said required air amount flows. When a diameter of the critical opening is measured (or known for example from the manufacturer), flow volume through the critical opening can be determined, and thus the required amount of air, i.e. oxidant, and the required amount of gas can be dispensed by the ejector by the determined, i.e. known, proportion. The gas sample and oxidant are reacted in a miniature catalyst 131 of the microcalorimeter. The means 133 (figure 4) comprise a processor unit 133 for calculating residual enthalpy change information of the residual gas from the anode side 100 gas based on known ejector 132 flow properties, i.e. known or measured diameter information of the at least one critical opening 138, and afterburner temperature change information according to the preferred embodiment of figure 5. Also afterburner 123 pressure level information can be measured by the means 121 (fig. 4) and said information utilized in the calculation of the residual enthalpy change information.

Instead of the ejector 132 in the embodiments according to the invention can be also utilized for example a venturi tube or an orifice plate on the basis of their known flow restrictions.

The means 127, 133 and 120a are preferably implemented by a calculative program used in at least one digital processor and the means 127, 133 and 120b can be located for example in a same computer 135 (Fig. 3), which comprises said at least one digital processor. The means 126 for obtaining fuel cell current information 103 are implemented for example by some prior art current or voltage measuring device.

The means 125 for measuring temperature are implemented for example by some prior art temperature measuring device, which form afterburner 123 temperature change information, which preferably comprises temperature rise information as said temperature change information from a substantially complete burning process of the afterburner. In forming of the afterburner temperature change information is preferably utilized air amount information and/or fuel volume flow information, which are provided for example by some prior art air amount and/or fuel flow measurement method and device. The afterburner temperature change information can also be formed from temperature information provided by sampling arrangement measurements, such as the described microcalorimeter setup.

A heat loss estimation model can be incorporated in the enthalpy change calculations to account for characterized heat loss to surroundings or known systematic error of temperature information. Correction terms for the calculations can be derived for example by using a calibrated methane measurement device for the fuel inlet or by accurate gas analysis of the fuel entering the burner or calorimeter.

In embodiments according to the present invention is also utilized a method and an arrangement to calibrate methane (CH4) measurement on-line in a fuel cell system, such as for example in a biogas SOFC application. The principle of the method is to calculate the enthalpy balance of the SOFC system. The sum of all enthalpy streams has to be zero. If only one enthalpy stream is unknown it can be calculated based on others. The known enthalpy streams are calculated based on measurements which are already needed to other purposes in the SOFC unit control. These other measurements are more accurate or more stable than the CH4 measurement so their usage to calibrate CH4 measurement is justified.

The known enthalpy feeds and the utilized measurements in a SOFC anode recycle type unit can be: A) air feed in measurements, such as temperature, flow amount and humidity measurement of the air feed-in, B) water flow in measurements, such as flow amount and temperature measurements of the water flow in, C) exhaust feed out information, which preferably is a combination of exhaust temperature measurement information and process calculation of composition and flow volume. Process calculation can be performed from system in flows for example by assuming that all fuel is burned in the afterburner. D) Electrical power production information, which can be based on voltage and/or electrical current measured, E) system heating information, which can be based for example on power consumption measured from at least one electrical heater, F) fan and/or compressor heating information of gas lines, which information can be based for example on efficiency information provided for example from manufacturer and/or on power consumption measured in the at least one fan and/or compressor, and G) heat loss information, which can be calculated, for example as is described in more detail later in this description.

The remaining enthalpy is fuel feed in. From fuel the $CO_2$ concentration, temperature and flow are measured, so the only unknown parameter is methane $CH_4$ concentration in an exemplary case where fuel is assumed to contain $CH_4$, $CO_2$ and $N_2$, where $N_2 = 1 - CH_4 - CO_2$.

According to the present invention only relatively rough accuracy in measurements is needed to obtain a good estimate for enthalpy flows and CH4 concentration. Furthermore most of the measurements are in practice easy as no substantially hot gas flows need to be measured. By utilizing this calculation method according to the invention and by performing needed measurements with standard SOFC system measurement instrumentation will result approximately to 3-5 times higher accuracy in CH4 measurement.

When heat loss to surroundings is determined, heat loss cannot be directly measured from an on-field unit. By implementing a calibrated CH4 measurement device, the calculation method according to the present invention can be utilized in a backward mode to estimate the heat loss for the particular fuel cell unit type. The heat loss is the same in all similar units so reference values should be also available when several fuel cell units are operated on-field. Additional estimate for heat loss can be also obtained from thermal simulations. The accuracy of heat loss estimate can be further increased by developing a model for heat loss changes during unit lifetime and due to changes in surrounding temperature based on laboratory tests and thermal simulations.

During a constant load operation the heat loss varies between different constant loading operation points even +/- 33 % in a substantially small fuel cell unit when error effects of the other measurements are considered.

Although the variation seems quite large, using heat loss estimate with this accuracy in embodiments according to the invention would yield still in only 0.6 % fuel cell unit error in CH4 concentration and about 1.5 % fuel cell unit error in the estimated fuel utilization (FU).

During start-up or shut-down situation the thermal gradients to surroundings vary by assuming a constant heat loss is not valid. It can be considered that during start-up or shut-down situation larger safety margins are employed for methane CH4 concentration, FU and oxygen to carbon ratio (O/C). After the unit has operated near nominal operating point for example 1-2 hours and the thermal gradients have stabilized, the safety-margins can be reduced and the calibration method according to the present invention can be used with its full accuracy.

In one exemplary embodiment according to the invention the method is applied to natural gas fuel, which contains 80-98 %, or even 60-98 %, of methane $CH_4$ with variation depending for example on geographical location and seasonal changes. The rest of the gas can consist varying amounts of higher hydrocarbons (e.g. $C_2H_6$, $C_3H_8$, $C_4H_{10}$), which are, as $CH_4$, reformed to SOFC fuel in the SOFC system, and the gas also consists of $N_2$ and of small amount of $CO_2$. Usually long-term average composition is well known by the gas supplier but the short-term deviations from the average values can be large, for example 10-20 %-units for $CH_4$. Accurate on-line measurement of all gas components is practically impossible. However, good estimates for FU and O/C can be achieved with the enthalpy balance calculation if fixed amounts are assumed for higher hydrocarbons, $CO_2$ is assumed to zero and only $CH_4$ fraction is solved. The $N_2$ content is "1 - others". The solved $CH_4$ fraction is not the real CH4 fraction as it resembles also the varying amount of enthalpy from the higher hydrocarbons. In two exemplary situations CH4 fraction is solved in situations where the actual fuel consists 80 % of $CH_4$, 18 % of higher hydrocarbons and 2 % of nitrogen $N_2$ fuel utilization FU is estimated with 1.5 % accuracy and oxygen to carbon ratio O/C is estimated with 6 % accuracy, with artificial fuel consisting only $CH_4$ and $N_2$.

Next is described a preferred method according to the present invention for determining enthalpy balance of a fuel cell system, in which method is fed fuel to the fuel cell system, and is performed anode 100 side recirculation flow of reactants. Enthalpy feed in flow information is formed from information gained by performing one or more of following method steps: is performed air feed in measurements to form air feed in information, is performed water flow in measurements to form water flow in information, is measured exhaust feed out to form exhaust feed out information, is measured electrical power to form electrical power production information, is measured temperature conditions to form heating information of the fuel cell system, and is formed heat loss information of the fuel cell system. Said measurements can be performed, at least mainly, by utilizing common and relatively cheap measurement equipment without high accuracy demands. Enthalpy feed in flow information can be provided by gaining information about gas lines for example from fan, compressor, etc. Exhaust feed out information can be provided by calculating information from fuel cell system in flows on the basis of an assumption that essentially all fuel is burnt in the afterburner. Further, in the method can be measured power consumption of at least one electrical heater to form heating information of the fuel cell system.

On the basis of the formed enthalpy feed in flow information is accomplished information of enthalpy flows to provide enthalpy balance information of the fuel cell system by summing information of enthalpy flows, and by detecting that sum of summed information of enthalpy flows is zero or essentially near to zero. Methane content information of the fuel feed is determined on the basis of said enthalpy balance information gained through summing of information of the enthalpy flows. Information of one enthalpy flow can be determined by calculating it on the basis of the summed information of enthalpy flows. By this way in the method is determined more adjusted methane content information to be utilized in controlling more accurately at least one of fuel utilization (FU) and oxygen to carbon ratio (O/C).

In one preferred embodiment of the method is calibrated at least one of the means for measurements 122, 124, 126, 128, 130, 134, 138 on the basis of the determined methane content information of the fuel feed. In the method can be also estimated heat loss characteristics for the fuel cell unit type, which is in use, to form a heat loss model of the fuel cell system on the basis of said estimation, said model to be utilized by the fuel cell system. The estimation of heat loss characteristics can also be calibrated on the basis of the determined methane content information of the fuel feed.

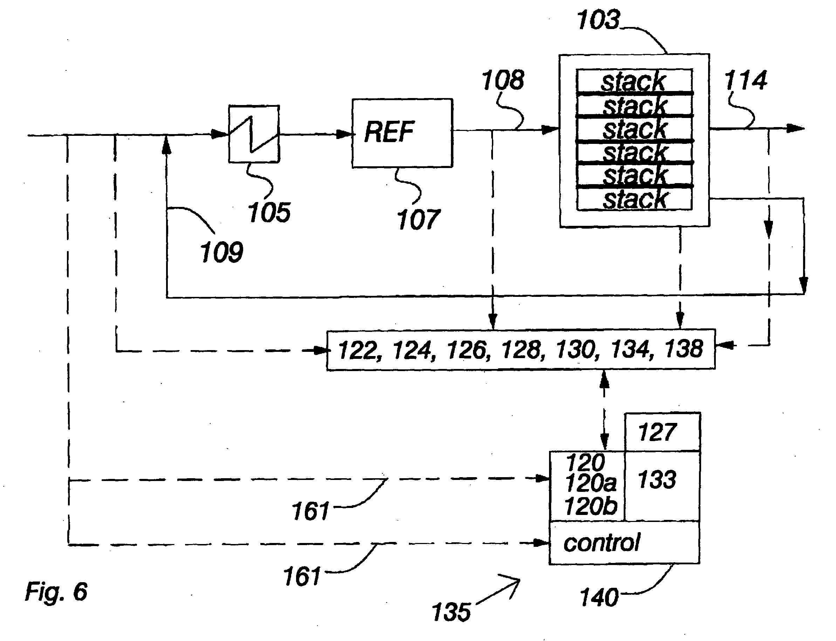

In figure 6 is presented a preferred arrangement according to the present invention for determining enthalpy balance of a fuel cell system by implementing the described preferred method. The fuel cell system comprises means 117 for feeding fuel to the fuel cell system. The means 117 can be arranged for example by prior art fuel feed system comprising a fuel source and a pipe line through which fuel is fed into the fuel cell system. The fuel cell system of figure 4 comprises means 109 for performing anode side 100 recirculation flow of reactants. The means 109 are not necessary in implementing the arrangement and method according to the invention, i.e. the present invention can also be implemented and utilized in a fuel cell system, which does not comprise recirculation of the anode side 100 gas. The preferred arrangement comprises means 120b for providing enthalpy balance information of the fuel cell system on the basis of information of enthalpy flows accomplished by utilizing enthalpy feed in flow information provided by one or more of following means: means 122 for performing air feed in measurements to form air feed in information, means 124 for performing water flow in measurements to form water flow in information, means 126 for providing exhaust feed out information, means 128 for measuring to form electrical power production information, means 130 for measuring to form heating information of the fuel cell system, and means 134 for determining heat loss information of the fuel cell system. Said means 122, 124, 126, 128, 130, 134 can be implemented, at least mainly, by utilizing common and relatively cheap measurement equipment without high accuracy demands. The arrangement can comprise as means for providing enthalpy feed in flow information means 138 for gaining information about gas lines for example from fan, compressor, etc. The means 126 can provide exhaust feed out information by calculating information from fuel cell system in flows on the basis of an assumption that essentially all fuel is burnt in the afterburner. The means 130 can measure power consumption of at least one electrical heater to form heating information of the fuel cell system.

The preferred arrangement comprises the means 120b to determine enthalpy balance of the fuel cell system by detecting that sum of summed information of enthalpy flows is zero or essentially near to zero. Information of at least one enthalpy flow can be determined by calculating it on the basis of the summed information of enthalpy flows. Further, the arrangement comprises means 135 for determining methane content information of the fuel feed on the basis of said provided enthalpy balance information. The preferred function of the means 135 is to determine more adjusted methane content information to the means 120b for controlling more accurately at least one of fuel utilization (FU) and oxygen to carbon ratio (O/C). The means 120b and the means 136 are preferably implemented by a calculative program used in at least one digital processor and the means 120b, 136 can be located for example in a same computer (Fig. 4), which comprises said at least one digital processor. The controlling of at least one of fuel utilization (FU) and oxygen to carbon ratio (O/C) is performed for example so that the means 120b give a control command via a control line 161 (wired or wireless), and the fuel cell system changes at least one of its operation factors (air amount, water amount, temperature, fuel cell voltage, etc) according to the control command.

One preferred arrangement can comprise means 138 for calibrating at least one of the means for measurements 122, 124, 126, 128, 130, 134, 138 on the basis of the determined methane content information of the fuel feed. The arrangement can also comprise means for estimating heat loss characteristics for the fuel cell unit type, which is in use, to form a heat loss model of the fuel cell system on the basis of said estimation, said model to be utilized by the fuel cell system. Also the means for estimating heat loss characteristics can be calibrated by said means 138 for calibrating on the basis of the determined methane content information of the fuel feed. The means for estimating heat loss characteristics can be arranged for example by a calibrated methane measurement device.

In embodiments according to the present invention can also be utilized a calculation based method for controlling fuel feed in application with variable fuel composition without a separate need for a gas composition measurement. The method is based on three superposed controls affecting the fuel feed attempting to match the fuel cell voltage to a predicted value, matching system energy (i.e. enthalpy) balance and tuning a degradation parameter (area stack resistance, ASR) for the voltage prediction based on average performance. Once properly converged/tuned, the method provides quick response to composition transients and reasonable accuracy in fuel utilization. The invention also presents an approach for achieving safe operation and convergence following a start-up with unknown initial fuel composition and with unknown area stack resistance, ASR.

A compensation term for long term drift of gas analyzers can be derived for example by balancing the system enthalpies or afterburner power. This can drastically improve the accuracy of control based on less expensive gas analyzers having a tendency to drift over time. The stabilization time of such correction methods is, however, in the range of tens of minutes up to tens of hours before large thermal masses stabilize in temperature before reliable steady-state calculations can be made. Such slow response times are insufficient for controlling the system during fast transients in fuel composition. Therefore, these approaches do not completely eliminate the need for a gas composition measurement although they can release the requirements on its accuracy, long-term stability and hence, price.

The method is based on three superposed methods for estimating the fuel composition each with distinct time constants. The first and fastest mechanism provides a proportional correction term to the assumed fuel inlet composition based on the difference between measured fuel cell voltages and a predicted voltage. The predicted voltage may be derived from a real-time model, lookup-table or soft computing methodologies based on fuel cell operating parameters including current, temperatures, pressures and (assumed) compositions. A change in the voltage difference will give a rise to a proportional change in the assumed fuel composition counteracting the difference. Within the relevant operating range, there is a clear correlation between fuel utilization and fuel cell voltage. If the predicted voltage before a sudden fuel inlet composition change is accurate, i.e. corresponds to the actual fuel utilization, then keeping the voltage stable during the change by changing fuel feed amount is likely to result in an essentially constant fuel utilization. The response towards changes in fuel utilization in the fuel cell voltage is essentially immediate. Also, fuel feed can be changed rapidly, i.e. within seconds. As a consequence, the combination of voltage prediction methodology and substantially quick convergence can provide even excellent response in compensating effects of fast changes in inlet fuel composition.

Although the described voltage stabilizing control is effective in maintaining an essentially constant fuel utilization in short term operation and in transient situations it cannot alone account for systematic deviations between the predicted and actual stack performance. Such deviations may arise due to numerous factors including quality differences in stacks, inaccuracy and drift in measurements, thermal delays following load (thermal) transients and particularly stack degradation. If the fuel cell voltage is predicted wrong due to e.g. a clearly incorrect value for the state of degradation of the fuel cells, then attempting to achieve this voltage by changing assumed inlet composition and hence fuel feed would lead to drastic deviating fuel utilization from targeted values. In the embodiments according to the invention, this inherent unreliability of voltage prediction is however overcome by applying two superposed tuning mechanisms on top of the voltage based control. The tuning is based on the fact that most of the above stated factors causing systematic error in the predicted voltage are compensated by the voltage stabilizing control. Anyway thermal delays in load transients are error type effects that change only slowly in time caused for example by degradation. At constant fuel cell load and consequently essentially constant temperatures these errors can be assumed to cause an essentially fixed deviation between actual and predicted voltage in a reasonably wide fuel inlet composition range. Therefore, operating the system fuel feed based on voltage should be sufficiently accurate under the conditions given above when a proper offset term to correct for the deviation between predicted and actual voltage is in place.

As a system has reached thermal equilibrium, input and output energies (enthalpies) of the system should add up to zero. Such a balance calculation can be used to derive one unknown input or output. In this case, inlet enthalpies consist of fuel and air streams whereas outlets are electrical energy, exhaust heat and heat loss to surroundings. The electrical energy as well as the exhaust residual enthalpies can be measured fairly accurately as can also the air inlet feed and fuel inlet volume flow. Heat loss to surroundings is fairly constant for a high temperature fuel cell system. This leaves inlet fuel enthalpy, i.e. composition, as the only unknown which can be solved based on calculation when the system has reached steady state. On the basis of simulations the above described methodology can provide fairly accurate estimations for the inlet fuel composition, i.e. methane content error is 1-2%, and readily available and low-cost measurement means can be used to measure the other enthalpies to form enthalpy information needed in the embodiments according to the invention. In combination with the previously described voltage based control method, this energy balance method can be used to provide a correction term for the composition or predicted voltage such that the average enthalpy balance is zero. Such correction term to the voltage control will force the fuel utilization (FU) to be at the desired value on average.

If a reasonably long averaging time is used for the energy balance calculation then the correction term will be insensitive to short term transients in e.g. fuel inlet compensation. The response to such transients consequently relies on the voltage control, which as stated previously is well suited for this. The energy balance calculation hence provides a base value for the fuel inlet composition on top of which the voltage based compensation applies a correction term to compensate for transients. Alternatively to calculating a system enthalpy balance, the balance calculation can also be based for example on afterburner heat output, i.e. preferably on residual enthalpy change in the afterburner, or other quantity showing reasonably strong response to the inlet fuel composition.

The two methods above will combined provide a reasonably good control response in a fuel cell system where the predicted and actual stack performance is relatively well aligned. This applies for stacks whose characteristics are well known and subject to little change. However, over the lifetime of a fuel cell, its characteristics may change significantly as a result of degradation. Attempting to operate a significantly degraded fuel cell with a prediction valid for a non-degraded cell will lead to erroneous compensation of the assumed fuel composition as deviating performance is attempted to be corrected falsely by altering the assumed fuel composition. With the two methods described above, this will lead to conflicting compensations where voltage compensation attempts to correct the fuel combustible content downward, whereas the energy balance correction will attempt to counteract this erroneous compensation. It is thus preferably to apply limits for the compensation terms to avoid such a situation from escalating. This example however highlights that the described methodology for fuel feed control can be unreliable if degradation is not properly taken into account in the voltage prediction.

The effect of degradation on the behaviour of a fuel cell can reasonably well be represented by a change in the area specific resistance (ASR), i.e. ohmic loss, of the cell. Therefore, providing a predictive model with a correct ASR value should result in a fairly accurate voltage prediction. A deviation between a measured voltage and predicted voltage can thus be assumed to be primarily caused by a deviation in actual vs. assumed fuel utilization, whereby voltage based fuel composition compensation works as a means for controlling the fuel utilization. Combined with an energy balance calculation approach, the accuracy will be further improved as the average fuel utilization is then corrected to a desired value.

Actual degradation rate may vary between different fuel cell applications and systems depending on operating conditions, duty cycles, quality variations etc. Hence, a purely open-loop type approach for estimating the degradation is highly unreliable. Degradation can be quantified based on a voltage-current curve at known conditions. As the conditions upon system start-up are however, unknown with respect to fuel inlet composition, said approach cannot as such be applied in an application where no direct fuel inlet composition measurement means are available. However, taking into account that degradation is generally a very slowly evolving phenomenon, it can be deduced at run-time independent of other effects causing short-term variations in stack voltages. The suggested approach is to slowly modify the ASR input parameter used for stack voltage prediction such that the average difference between predicted and measured voltage is driven towards zero. This correction mechanism can operate with a clearly higher time constant than the energy balance calculation (e.g. weeks to months) to avoid instability between the two and to avoid a wrong FU from leading to erroneous ASR. This approach for determining the ASR can be combined with other approaches for deriving an ASR estimate e.g. to provide a good initial value for the ASR after a system start-up (with possibility of stacks damage having taken place during a thermal cycle). Such other approaches include open circuit voltage measurement, i.e. rough estimate to detect damaged/replaced stacks, run-time stack resistance measurements and/or stack leakage estimations based for example on temperature information and/or on afterburner power information.

Combining the three methods given above, the simplified algorithms for determining the input fuel composition are as follows:

$$xCH4_{in,assumed} = \text{Base value} + \text{Gain1} * (U_{predicted}(ASR_n) - U_{measured}) + EB_n$$

$$EB_n = EB_{n-1} + \text{Gain2} * (\Sigma(\text{Enthaplies}))$$

$$ASR_n = ASR_{n-1} + \text{Gain3} * (U_{predicted}(ASR_{n-1}) - U_{measured})),$$

where the last control algorithm has the clearly longest time constant. Instead of purely proportional for the first control (Gain1) and purely integrating for the latter ones it is possible to apply for example a combination of proportional and integrating gains. Other approaches such as hysteresis control are also applicable.

In a transient operation method when a correct value is in place for the fuel cell ASR and the energy balancing has been given time to stabilize, the method provides a fast and reasonably accurate response to transients in fuel composition as well as for load transients in a limited range. The most challenging case for the use of the method is a system start-up where the initial ASR may be unknown and initial fuel composition is unknown. A number of approaches can be used to perform the initial tuning of the model.

In the determination of ASR can also be utilized neural network modelling. For example an ASR correction term can be accomplished by a semi adaptive neural network modelling. Also in a start up situation of the fuel cell system, an updated and adapted neural network model for the remaining stacks provides a relatively accurate start value for the ASR.

Depending on the expectable range of variation in the inlet fuel composition it is possible to define a fuel cell loading point below nominal load where it is possible to operate the system without risk of damage even without knowing the fuel composition. The "safe mode" operating point shall fulfil the following criteria: A) Fuel feed (or in other words FU) is sufficient even for the most diluted fuel. B) Coking conditions are avoided even for the most rich fuel. C) Afterburner maximum output power/temperature is not exceeded even for the most rich fuel.

The narrower the fuel variation range, the closer to the nominal current it is possible to operate without risk of coking if anode recirculation is kept at nominal (i.e. maximum). For example, for a relatively wide fuel methane content variation of 30-45%, it is possible to achieve approximately 60% of the nominal current with fuel utilization and O/C constraints fulfilled for a fixed inlet volume flow. The afterburner duty is most sensitive to too high fuel feed. In the example case, operation at actual 45% methane inlet composition with flow set according to a methane content of 30% would yield an afterburner power of approximately twice the nominal. Such a deviation is easily measurable and can be used to narrow down the potential range of possible fuel compositions.

In an embodiment according to the invention, the following approach is suggested for starting up a fuel cell system with an initial area specific resistance (ASR) in stacks and fuel composition being unknown: I Minimum and maximum values for fuel methane (or combustible content) are defined. Initially these are set to span the full range of fuel composition variation. II The system is brought up to a predefined safe mode loading point, for example 60% of nominal current, where fuel feed is controlled based on the minimum methane content of the fuel and coking prevention, i.e. anode side recirculation and possible water feed, is controlled based on the maximum methane content of the fuel. III The minimum fuel methane content (and hence fuel feed) is adjusted to maintain the afterburner close to its nominal (i.e. maximum) power. This corresponds to a relatively low fuel utilization (FU) as current is below nominal. At such low utilizations, the effect of FU on stack voltages is less pronounced, and ASR can be assessed even with uncertainty in the fuel composition. In practise, Gain3 can be increased during this tuning period. If the start-up is a continuation of previous runs with the same stack batch, then the old ASR value can directly be applied as starting value and there should be little need for tuning. IV As the system stabilizes, energy balance calculation can be initiated and applied separately for the upper and lower limits for the fuel composition causing them to converge towards a common value. In inverse proportion to narrowing down the composition range, the gain for the voltage based control (Gain1) is increased to provide transient response as operating margins are decreased. V The fuel cell current can be increased towards the nominal point as average composition uncertainty and/or uncertainty in ASR decreases. This increase can be gradual or triggered by the event when the uncertainty in the composition or uncertainty in ASR, i.e. deviation between predicted and measured voltage, drop below certain value(s).

In the embodiments according to the invention it is possible to safely start a fuel cell system without knowledge of the initial fuel composition and stack ASR. The larger the initial uncertainty in the two, the longer time the system will have to stabilize, i.e. spend in a safe mode before nominal operation can be achieved. In the most improved voltage prediction methodologies, i.e. to include dynamic effects, said stabilization time can be even substantially reduced. Even with a worst case stabilization time in the range of tens of hours, time is short compared to the typical stable operating period in a base load application according to the prior art. The invention is most optimally suited for applications where composition variations are relatively limited and most often slow drifted, but the invention can also be applied for more demanding cases although it may require operating with somewhat higher safety margins particularly with respect to coking to compensate for the inherent uncertainty factors.

In a control method according to the present invention is adapted a fuel cell system to composition of fuel, which is fed to fuel cells 103. Anode 100 side recirculation flow 109 is performed for reactants. Fuel cell voltages are measured to form measured cell voltage information. A first control mechanism is performed to determine assumed inlet fuel composition information. Further in the first control mechanism is determined a predicted cell voltage information in a calculative process utilizing fuel cell system data and/or measurement information from the fuel cell system, and then is determined a correction term to the assumed inlet fuel composition information based on the difference between said measured cell voltage information and said predicted cell voltage information. Preferably two superposed control mechanisms 156, 158 can be utilized to the first control mechanism, which compensates at least mainly transient type of voltage. Said two superposed control mechanisms to the first control mechanism are performing at least mainly tuning type control operations, which have a distinct time constant between control operations compared to the control operations of the first control mechanism. Said tuning type control operations are performed for matching the assumed inlet fuel composition information to the real fuel composition during start-up or during operation of the fuel cell system.

In at least one superposed control mechanism 156 of the control method is determined fuel cell system enthalpy balance conditions, and in the at least one superposed control mechanism 158 is tuned a degradation parameter to determine predicted cell voltage information by the first control mechanism. Further in the control method can be utilized at least one superposed control mechanism 156, 158 to the first control mechanism to narrow down confidence intervals, i.e. allowed ranges of values, for at least partially unknown fuel composition and at least partially unknown stack area specific resistance (ASR). This embodiment of confidence intervals can be utilized at least in start up process of the fuel cell system by determining an allowed range of values to at least partially unknown fuel composition and/or at least partially unknown stack area specific resistance (ASR). In different control operations can be used different control values from said allowed range, preferably from both edges of the range. When operation of the fuel cell system becomes more stable and enthalpy balance is more reliable, the allowed range of values to the fuel composition can be controlled to be narrower. This controlling of width of the allowed range can be utilized, not only in start up process of the fuel cell system, but also during other operation process of the fuel cell system, the allowed range being narrower after a more stable operation of the fuel cell system.

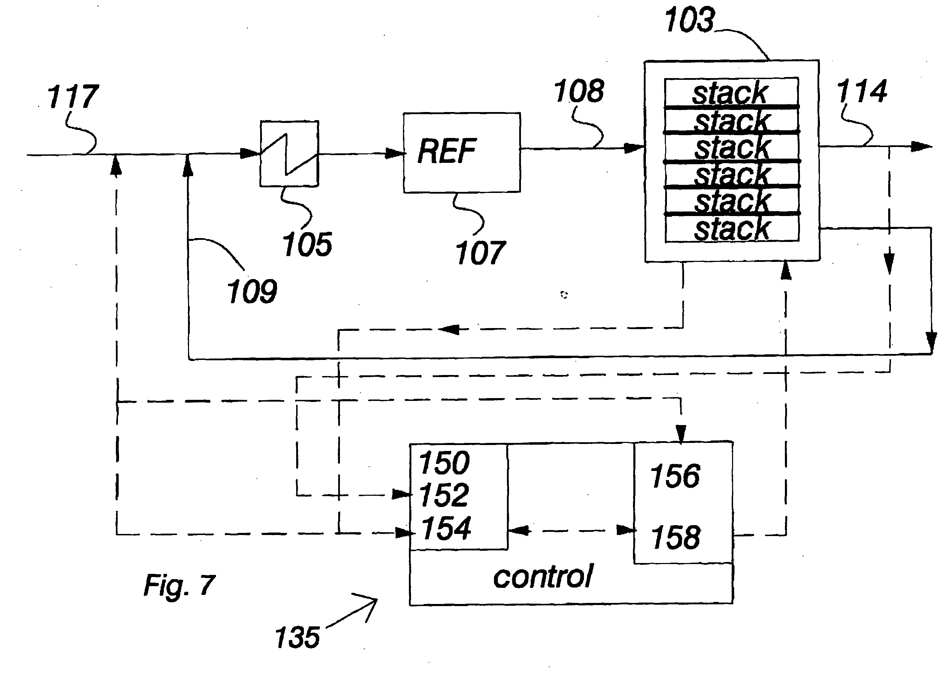

In figure 7 is presented a control arrangement according to the present invention to implement the described method for adapting a fuel cell system to fuel composition. The fuel cell system comprises means 116 for feeding fuel to the fuel cells 103 and means 109 for performing anode 100 side recirculation flow of reactants. The means 116 can be arranged for example by prior art fuel feed system comprising a fuel source and a pipe line through which fuel is fed into the fuel cell system. The means 109 are not necessary in implementing the arrangement and method according to the invention, i.e. the present invention can also be implemented and utilized in a fuel cell system, which does not comprise recirculation of the anode side 100 reactants. The fuel cell system also comprises means 115 for measuring fuel cell voltages to form measured cell voltage information. The control arrangement comprises a first control mechanism which is implemented by means 150 for determining assumed inlet fuel composition information, means 152 for determining predicted cell voltage information, and means 154 for determining a correction term to the assumed inlet fuel composition information based on the difference between said measured cell voltage information and said predicted cell voltage information. The control arrangement comprises a superposed control mechanism to the first control mechanism, which is implemented by means 156 for determining fuel cell system enthalpy balance conditions. The control arrangement also comprises another superposed control mechanism to the first control mechanism, which is implemented by means 158 for tuning a degradation parameter to determine predicted cell voltage information by the first control mechanism.

As described related to figure 4, the control arrangement comprises the two superposed control mechanisms 156, 158 to the first control mechanism, which compensates at least mainly transient type of voltage in this embodiment. These two superposed control mechanisms 156, 158 to the first control mechanism are used for performing at least mainly tuning type control operations, which have a distinct time constant between control operations compared to the control operations of the first control mechanism. Said tuning type control operations are being performed for matching the assumed inlet fuel composition information to the real fuel composition during start-up or operation of the fuel cell system.

The means 150, 152, 154, 156 and 158 are preferably implemented by a calculative program used in at least one digital processor and the means 150, 152, 154, 156 and 158 can be located for example in a same computer 135 (Fig. 6), which comprises said at least one digital processor.
The means 115 for measuring fuel cell voltages to form measured cell voltage information are implemented for example by some prior art voltage measuring device.

In one embodiment of the present invention the control arrangement comprises at least one superposed control mechanism 156, 158 to the first control mechanism to narrow down confidence intervals, i.e. allowed ranges of values, for at least partially unknown fuel composition and at least partially unknown stack area specific resistance (ASR). This arrangement of confidence intervals can be utilized in start up process of the fuel cell system and also in other operation process of the fuel cell system to implement the above described method of confidence intervals.

Also in one embodiment different method combinations of the present invention can be also utilized to determine drift of mass flow meter, when fuel composition remains essentially same, or fuel composition and/or fuel flow velocity can be determined accurately enough.

In a preferred embodiment according to the present invention the arrangement and method presented related to figures 4 and 5 together with the arrangement and method related to figure 6 can be used to determine leakage rates of the fuel cell system, and especially to determine the changes in the leakage rates. In this preferred embodiment the fuel cell system comprises means 109 for performing anode side 100 recirculation flow of reactants. The preferred arrangement comprises means 125 for measuring temperature in the afterburner 123 or substantially near the afterburner 123 to form afterburner temperature change information, means 127 for determining information on consumed fuel amount in the fuel cells 103 on the basis of the current information, means for determining information on air amount in the afterburner 123 and means 133 for determining residual enthalpy change information on the basis of said afterburner temperature change information, said information on air amount in the afterburner, and on the basis of said information on consumed fuel amount in the fuel cells. In the preferred embodiment the means 133 are used for discrete or continuous sampling of gas flow in the fuel cell system to form sample information, and the means 140 are used for modifying the gas flow on the basis of the formed sample information. The means 133 for determining residual enthalpy change information in one preferred embodiment comprise a microcalorimeter setup, which comprises at least one ejector 132 for sucking required gas flow from the residual gas from the anode side 100 and required air flow into a catalyst chamber 130 to form a gas sample, and a miniature catalyst 131 for burning the gas sample, and the means 133 also comprise a processor unit 133 for calculating residual enthalpy change information of the residual gas from the anode side based on known gas and air flow proportions, and afterburner temperature change information.

The preferred arrangement comprises first information means 120a for obtaining at least one of fuel input enthalpy information and fuel input concentration information on the basis of the determined residual enthalpy change information, the first information means 120a being configured to determine first methane content information of the fuel feed 117 by utilizing said obtained at least one of fuel input enthalpy information and fuel input concentration information. The preferred arrangement comprises means 140 for controlling input of the fuel cell system on the basis of the first methane content information determined by the first information means 120a. In this preferred embodiment is utilized second information means 120b for providing enthalpy balance information of the fuel cell system on the basis of information of enthalpy flows accomplished by utilizing enthalpy feed in flow information provided by one or more of following means: means 122 for performing air feed in measurements to form air feed in information, means 124 for performing water flow in measurements to form water flow in information, means 126 for providing exhaust feed out information, means 128 for measuring to form electrical power production information, means 130 for measuring to form heating information of the fuel cell system, and means 134 for determining heat loss information of the fuel cell system.

The preferred arrangement comprises the second information means 120b for determining enthalpy balance of the fuel cell system by detecting that sum of summed information of enthalpy flows is zero or essentially near to zero, the second information means 120b being configured to determine second methane content information of the fuel feed on the basis of said provided enthalpy balance information. The preferred arrangement further comprises means 120 for determining leakage level information of the fuel cell system on the basis of differences between the first and second methane content information, because enthalpy balance does not change due to leakages, but residual enthalpy of the afterburner does change due to leakages. This is why differences between the first and second methane content information are caused by leakages. Then the means 140 are used for performing more accurate control of the fuel cell system on the basis of said determined leakage level information by utilizing residual enthalpy determination method by means 120a with a corrected leakage value to perform said more accurate control of the fuel cell system. The arrangement can also comprise means 140 for accurate controlling of input of the fuel cell system by utilizing a corrected leakage value formed on the basis of the determined leakage level information. Distribution of work can also be different between different processor means utilized in the implementation of the invention.

Preferably the arrangement is configured to determine more adjusted methane content information of the fuel feed 117 by at least one of the means 120a, 120b for a more accurate control of at least one of fuel utilization (FU) and oxygen to carbon ratio (O/C) in the fuel cell system.

In one embodiment the arrangement can comprise, as presented related to figure 7, means 115 for measuring fuel cell voltages to form measured cell voltage information and a first control mechanism, which is arranged by means 150 for determining assumed inlet fuel composition information, by means 152 for determining predicted cell voltage information, and by means 154 for determining a correction term to the assumed inlet fuel composition information based on the difference between said measured cell voltage information and said predicted cell voltage information. In this embodiment according to figure 7 the arrangement comprises at least one superposed control mechanism 156, 158 to the first control mechanism for performing at least mainly tuning type control operations, which have a distinct time constant between control operations compared to the control operations of the first control mechanism. The tuning type control operations are performed for matching the assumed inlet fuel composition information to the real fuel composition during start-up or operation of the fuel cell system.

When the arrangement presented in figures 4, 6, and 7 comprises means 133 for performing discrete sampling operations from gas flow in the fuel cell system to form sample information, the tuning type control operations are performed for matching the assumed inlet fuel composition information to the real fuel composition between said discrete sampling operations during start-up or operation of the fuel cell system.

Although the invention has been presented in reference to the attached figures and specification, the invention is by no means limited to those as the invention is subject to variations within the scope allowed for by the claims.

**Claims**

1.  An arrangement for determination of leakage levels in a fuel cell system, each fuel cell in the fuel cell system comprising an anode side (100), a cathode side (102), and an electrolyte (104) between the anode side and the cathode side, and the fuel cell system comprising means (117) for feeding fuel to the fuel cell system, means (126) for obtaining fuel cell (103) current information and an afterburner (123) for performing burning of residual gas from the anode side (100), **characterized by**, that the arrangement comprises means (125) for measuring temperature in the afterburner (123) or substantially near the afterburner (123) to form afterburner temperature change information, means (127) for determining information on consumed oxygen amount and on consumed fuel amount in the fuel cells (103) on the basis of the current information, means for determining information on air amount in the afterburner (123), means (133) for determining residual enthalpy change information on the basis of said afterburner temperature change information, said information on air amount in the afterburner, and on the basis of said information on consumed fuel amount in the fuel cells, first information means (120a) for obtaining at least one of fuel input enthalpy information and fuel input concentration information on the basis of the determined residual enthalpy change information, the first information means (120a) being configured to determine first methane content information of the fuel feed (117) by utilizing said obtained at least one of fuel input enthalpy information and fuel input concentration information, and the arrangement comprises means (140) for controlling input of the fuel cell system on the basis of the first methane content information determined by the first information means (120a), second information means (120b) for providing enthalpy balance information of the fuel cell system on the basis of information of enthalpy flows accomplished by utilizing enthalpy feed in flow information provided by one or more of following means: means (122) for performing air feed in measurements to form air feed in information, means (124) for performing water flow in measurements to form water flow in information, means (126) for providing exhaust feed out information, means (128) for measuring to form electrical power production information, means (130) for measuring to form heating information of the fuel cell system, and means (134) for determining heat loss information of the fuel cell system, and the arrangement comprises the second information means (120b) for determining enthalpy balance of the fuel cell system by detecting that sum of summed information of enthalpy flows is zero or essentially near to zero, the second information means (120b) being configured to determine second methane content information of the fuel feed on the basis of said provided enthalpy balance information, and the arrangement comprises means (120) for determining leakage level information of the fuel cell system on the basis of differences between the first and second methane content information, and said means (140) for performing more accurate control of the fuel cell system on the basis of said determined leakage level information.

2.  An arrangement for determination of leakage levels in a fuel cell system in accordance with claim 1, **characterized by**, that the arrangement comprises means (140) for accurate controlling input of the fuel cell system by utilizing a corrected leakage value formed on the basis of the determined leakage level information.

3.  An arrangement for determination of leakage levels in a fuel cell system in accordance with claim 1, **characterized by**, that the arrangement being configured to determine more adjusted methane content information of the fuel feed (117) by at least one of the means (120a, 120b) for a more accurate control of at least one of fuel utilization (FU) and oxygen to carbon ratio (O/C) in the fuel cell system.

4.  An arrangement for determination of leakage levels in a fuel cell system in accordance with claim 1, **characterized by**, that the arrangement comprises means (133) for sampling gas flow in the fuel cell system to form sample information, and means (140) for modifying the gas flow on the basis of the formed sample information.

5.  An arrangement for determination of leakage levels in a fuel cell system in accordance with claim 4, **characterized by** that the arrangement comprises means (133) for performing discrete sampling operations from gas flow in the fuel cell system to form sample information.

6.  An arrangement for determination of leakage levels in a fuel cell system in accordance with claim 1, **characterized by**, that the means (133) for determining residual enthalpy change information comprise a microcalorimeter setup, which comprises at least one ejector (132) for sucking required gas flow from the residual gas from the anode side (100) and required air flow into a catalyst chamber (130) to form a gas sample, and a miniature catalyst (131) for burning the gas sample, and the means (133) comprise a processor unit (133) for calculating residual enthalpy change information of the residual gas from the anode side based on known gas and air flow proportions, and afterburner temperature change information.

7.  An arrangement for determination of leakage levels in a fuel cell system in accordance with claim 1, **characterized by** that the arrangement comprises means (115) for measuring fuel cell voltages to form measured cell voltage information and a first control mechanism, which is arranged by means (150) for determining assumed inlet fuel composition information, means (152) for determining predicted cell voltage information, and means (154) for determining a correction term to the assumed inlet fuel composition information based on the difference between said measured cell voltage information and said predicted cell voltage information, and the arrangement comprises at least one superposed control mechanism (156, 158) to the first control mechanism for performing at least mainly tuning type control operations, which have a distinct time constant between control operations compared to the control operations of the first control mechanism, said tuning type control operations being performed for matching the assumed inlet fuel composition information to the real fuel composition during start-up or operation of the fuel cell system.

8.  An arrangement for determination of leakage levels in a fuel cell system in accordance with claims 5 and 7, **characterized by**, that the arrangement comprises said at least one superposed control mechanism (156, 158) to the first control mechanism for performing at least mainly tuning type control operations, which have a distinct time constant between control operations compared to the control operations of the first control mechanism, said tuning type control operations being performed for matching the assumed inlet fuel composition information to the real fuel composition between said discrete sampling operations during start-up or operation of the fuel cell system.

9.  An arrangement for determination of leakage levels in a fuel cell system in accordance with claim 1, **characterized by**, that the fuel cell system comprises means (109) for performing anode side (100) recirculation flow of reactants.

10. A method to determine leakage levels in a fuel cell system, in which method is fed fuel to the fuel cell system, is obtained fuel cell current information, and is burnt residual gas from the anode side (100) in an afterburner (123), **characterized by**, that in the method is measured temperature in the afterburner (123) or substantially near the afterburner (123) to form afterburner temperature change information, is determined information on consumed oxygen amount and on consumed fuel amount in the fuel cells (103) on the basis of the current information, is determined information on air amount in the afterburner (123), is determined residual enthalpy change information on the basis of said afterburner temperature change information, said information on air amount in the afterburner, and on the basis of said information on consumed fuel amount in the fuel cells, is obtained at least one of fuel input enthalpy information and fuel input concentration information on the basis of the determined residual enthalpy change information, and in the method is determined first methane content information of the fuel feed (117) by utilizing said obtained at least one of fuel input enthalpy information and fuel input concentration information, is controlled input of the fuel cell system on the basis of the first methane content information, is formed enthalpy feed in flow information from information gained by performing one or more of following method steps: is performed air feed in measurements to form air feed in information, is performed water flow in measurements to form water flow in information, is measured exhaust feed out to form exhaust feed out information, is measured electrical power to form electrical power production information, is measured temperature conditions to form heating information of the fuel cell system, and is formed heat loss information of the fuel cell system, and on the basis of the formed enthalpy feed in flow information is accomplished information of enthalpy flows to provide enthalpy balance information of the fuel cell system by summing information of enthalpy flows, and by detecting that sum of summed information of enthalpy flows is zero or essentially near to zero, second methane content information of the fuel feed being determined on the basis of the provided enthalpy balance information, and in the method is determined leakage level information of the fuel cell system on the basis of differences between the first and second methane content information, and is performed more accurate control of the fuel cell system on the basis of said determined leakage level information.

11. A method to determine leakage levels in a fuel cell system in accordance with claim 10, **characterized by**, that in the method is performed accurate control of input of the fuel cell system by utilizing a corrected leakage value formed on the basis of the determined leakage level information.

12. A method to determine leakage levels in a fuel cell system in accordance with claim 10, **characterized by**, that in the method is determined more adjusted methane content information of the fuel feed (117) for a more accurate control of at least one of fuel utilization (FU) and oxygen to carbon ratio (O/C) in the fuel cell system.

13. A method to determine leakage levels in a fuel cell system in accordance with claim 10, **characterized by**, that in the method is sampled gas flow in the fuel cell system to form sample information, and is modified the gas flow on the basis of the formed sample information.

14. A method to determine leakage levels in a fuel cell system in accordance with claim 13, **characterized by**, that in the method is performed discrete sampling operations from gas flow in the fuel cell system to form sample information.

15. A method to determine leakage levels in a fuel cell system in accordance with claim 13, **characterized by**, that in the method is determined residual enthalpy change information by sucking required gas flow from the residual gas from the anode side (100) for forming a gas sample, said gas sample being burnt after said forming, and residual enthalpy change information of the residual gas from the anode side is calculated based on known restrictions, and afterburner temperature change information.

16. A method to determine leakage levels in a fuel cell system in accordance with claim 10, **characterized by**, that in the method is measured fuel cell voltages to form measured cell voltage information, is performed a first control mechanism to determine assumed inlet fuel composition information, to determine predicted cell voltage information, and to determine a correction term to the assumed inlet fuel composition information based on the difference between said measured cell voltage information and said predicted cell voltage information, and in the method is utilized at least one superposed control mechanism (156, 158) to the first control mechanism for performing at least mainly tuning type control operations, which have a distinct time constant between control operations compared to the control operations of the first control mechanism, said tuning type control operations being performed for matching the assumed inlet fuel composition information to the real fuel composition during start-up or operation of the fuel cell system.

17. A method to determine leakage levels in a fuel cell system in accordance with claims 14 and 16, **characterized by**, that in the method is utilized at least one superposed control mechanism (156, 158) to the first control mechanism for performing at least mainly tuning type control operations, which have a distinct time constant between control operations compared to the control operations of the first control mechanism, said tuning type control operations being performed for matching the assumed inlet fuel composition information to the real fuel composition between said discrete sampling operations during start-up or operation of the fuel cell system.

18. A method in accordance with claim 10, **characterized by**, that in the method is performed anode (100) side recirculation flow of reactants.

**Patentansprüche**

1. Anordnung zur Bestimmung der Leckstände in einem Brennstoffzellensystem, wobei jede Brennstoffzelle in dem Brennstoffzellensystem eine Anodenseite (100), eine Kathodenseite (102) und einen Elektrolyten (104) zwischen der Anodenseite und der Kathodenseite umfasst, und wobei das Brennstoffzellensystem Mittel (117) für eine Brennstoffzufuhr zu dem Brennstoffzellensystem, Mittel (126), um Informationen über den Strom der Brennstoffzellen (103) zu erhalten, und einen Nachbrenner (123), um ein Verbrennen von Restgas von der Anodenseite (100) durchzuführen, umfasst, **dadurch gekennzeichnet, dass** die Anordnung Mittel (125) zum Messen der Temperatur in dem Nachbrenner (123) oder im Wesentlichen in der Nähe des Nachbrenners (123), um Informationen über eine Temperaturveränderung beim Nachbrenner zu bilden, Mittel (127) zum Bestimmen von Informationen über die verbrauchte Sauerstoffmenge und über die verbrauchte Brennstoffmenge in den Brennstoffzellen (103) auf der Basis der Strominformationen, Mittel zum Bestimmen von Informationen über die Luftmenge in dem Nachbrenner (123), Mittel (133) zum Bestimmen von Informationen über die Veränderung der Restenthalpie auf der Basis der Informationen über die Temperaturveränderung beim Nachbrenner, der Informationen über die Luftmenge in dem Nachbrenner und auf der Basis der Informationen über die verbrauchte Brennstoffmenge in den Brennstoffzellen, erste Informationsmittel (120a), um Informationen über die Enthalpie des Brennstoffeinsatzes und/oder Informationen über die Konzentration des Brennstoffeinsatzes auf der Basis der bestimmten Informationen über die Veränderung der Restenthalpie zu erhalten, umfasst, wobei die ersten Informationsmittel (120a) konfiguriert sind, um erste Informationen über den Methangehalt der Brennstoffzufuhr (117) zu bestimmen, indem die erhaltenen Informationen über die Enthalpie des Brennstoffeinsatzes und/oder die erhaltenen Informationen über die Konzentration des Brennstoffeinsatzes verwendet werden, und wobei die Anordnung Mittel (140) umfasst, um den Einsatz des Brennstoffzellensystems auf der Basis der ersten Informationen des Methangehalts, die von den ersten Informationsmitteln (120a) bestimmt werden, zu steuern, und zweite Informationsmittel (120b) umfasst, um Informationen über die Enthalpiebilanz des Brennstoffzellensystems auf der Basis der Informationen der Enthalpieflüsse bereitzustellen, die durchgeführt werden, indem die Enthalpiezufuhr in Flussinformationen verwendet wird, die durch ein oder mehrere der folgenden Mittel bereitgestellt werden: Mittel (122) zum Durchführen einer Luftzufuhr in Messungen, um eine Luftzufuhr in Informationen zu bilden, Mittel (124) zum Durchführen eines Wasserflusses in Messungen, um einen Wasserfluss in Informationen zu bilden, Mittel (126), um Informationen über die Abführung des Abgases bereitzustellen, Mittel (128) zum Messen, um Informationen über die Erzeugung elektrischer Energie zu bilden, Mittel (130) zum Messen, um Wärmeinformationen des Brennstoffzellensystems zu bilden, und Mittel (134), um Informationen über Wärmeverluste des Brennstoffzellensystems zu bestimmen, und wobei die Anordnung zweite Informationsmittel (120b) umfasst, um die Enthalpiebilanz des Brennstoffzellensystems zu bestimmen, indem detektiert wird, dass die Summe aller aufsummierten Enthalpieflüsse Null ergibt oder im Wesentlichen nahe bei Null liegt, wobei die zweiten Informationsmittel (120b) konfiguriert sind, um zweite Informationen über den Methangehalt der Brennstoffzufuhr auf der Basis der bereitgestellten Informationen über die Enthalpiebilanz zu bestimmen, und wobei die Anordnung Mittel (120) umfasst, um Informationen über Leckstände des Brennstoffzellensystems auf der Basis von Differenzen zwischen den ersten und den zweiten Informationen über den Methangehalt zu bestimmen, und wobei die Anordnung die Mittel (140) umfasst, um eine genauere Steuerung des Brennstoffzellensystems auf der Basis der bestimmten Informationen über Leckstände durchzuführen.

2. Anordnung zur Bestimmung der Leckstände in einem Brennstoffzellensystem nach Anspruch 1, **dadurch gekennzeichnet, dass** die Anordnung Mittel (140) umfasst, um den Einsatz des Brennstoffzellensystems genau zu steuern, indem ein korrigierter Leckwert verwendet wird, der auf der Basis der bestimmten Informationen über Leckstände gebildet wird.

3. Anordnung zur Bestimmung der Leckstände in einem Brennstoffzellensystem nach Anspruch 1, **dadurch gekennzeichnet, dass** die Anordnung konfiguriert ist, um angepasstere Informationen eines Methangehalts der Brennstoffzufuhr (117) durch mindestens eines der Mittel (120a, 120b) für eine genauere Steuerung der Brennstoffverwertung (FU) und/oder des Verhältnisses Sauerstoff zu Kohlenstoff (0/C) in dem Brennstoffzellensystem zu bestimmen.

4. Anordnung zur Bestimmung der Leckstände in einem Brennstoffzellensystem nach Anspruch 1, **dadurch gekennzeichnet, dass** die Anordnung Mittel (133), um in dem Gasstrom in dem Brennstoffzellensystem Proben zu nehmen, um Probeninformationen zu bilden, und Mittel (140), um den Gasstrom auf der Basis der gebildeten Probeninformationen zu verändern, umfasst.

5. Anordnung zur Bestimmung der Leckstände in einem Brennstoffzellensystem nach Anspruch 4, **dadurch gekennzeichnet, dass** die Anordnung Mittel (133) umfasst, um aus dem Gasstrom in dem Brennstoffzellensystem diskrete Probenahmen durchzuführen, um Probeninformationen zu bilden.

6. Anordnung zur Bestimmung der Leckstände in einem Brennstoffzellensystem nach Anspruch 1, **dadurch gekennzeichnet, dass** die Mittel (133) zum Bestimmen von Informationen über die Veränderung der Restenthalpie einen Mikrokalorimeteraufbau, der mindestens einen Ejektor (132) umfasst, um einen erforderlichen Gasstrom aus dem Restgas von der Anodenseite (100) und einen erforderlichen Luftstrom in eine Katalysatorkammer (130) anzusaugen, um eine Gasprobe zu bilden, und einen Miniaturkatalysator (131), um die Gasprobe zu verbrennen, umfassen, und wobei die Mittel (133) eine Prozessoreinheit (133) umfassen, um Informationen über die Veränderung der Restenthalpie des Restgases von der Anodenseite auf der Basis bekannter Verhältnisse von Gas und Luftstrom und auf der Basis der Informationen über die Temperaturveränderung beim Nachbrenner zu berechnen.

7. Anordnung zur Bestimmung der Leckstände in einem Brennstoffzellensystem nach Anspruch 1, **dadurch gekennzeichnet, dass** die Anordnung Mittel (115) umfasst, um die Spannungen der Brennstoffzelle zu messen, um Informationen über die gemessene Zellspannung zu bilden, und einen ersten Steuermechanismus umfasst, der angeordnet ist durch Mittel (150), um Informationen der angenommenen Zusammensetzung des Einlassbrennstoffes zu bestimmen, durch Mittel (152), um Informationen über die vorhergesagte Zellspannung zu bestimmen, und durch Mittel (154), um einen Korrekturterm für die Informationen der angenommenen Zusammensetzung des Einlassbrennstoffes auf der Basis der Differenz zwischen den Informationen der gemessenen Zellspannung und den Informationen der vorhergesagten Zellspannung zu bestimmen, und wobei die Anordnung mindestens einen dem ersten Steuermechanismus überlagerten Steuermechanismus (156, 158) umfasst, um mindestens hauptsächlich Steueroperationen vom Typ einer Abstimmungssteuerung durchzuführen, die eine andere Zeitkonstante zwischen den Steueroperationen verglichen mit den Steueroperationen des ersten Steuermechanismus aufweisen, wobei die Steueroperationen vom Typ einer Abstimmungssteuerung durchgeführt werden, um während des Startens oder während des Betriebs des Brennstoffzellensystems die Informationen der angenommenen Zusammensetzung des Einlassbrennstoffes mit der tatsächlichen Brennstoffzusammensetzung abzugleichen.

8. Anordnung zur Bestimmung der Leckstände in einem Brennstoffzellensystem nach Anspruch 5 und 7, **dadurch gekennzeichnet, dass** die Anordnung den mindestens einen dem ersten Steuermechanismus überlagerten Steuermechanismus (156, 158) umfasst, um mindestens hauptsächlich Steueroperationen vom Typ einer Abstimmungssteuerung durchzuführen, die eine andere Zeitkonstante zwischen den Steueroperationen verglichen mit den Steueroperationen des ersten Steuermechanismus aufweisen, wobei die Steueroperationen vom Typ einer Abstimmungssteuerung durchgeführt werden, um während des Startens oder während des Betriebs des Brennstoffzellensystems die Informationen der angenommenen Zusammensetzung des Einlassbrennstoffes mit der tatsächlichen Brennstoffzusammensetzung zwischen den diskreten Steueroperationen abzugleichen.

9. Anordnung zur Bestimmung der Leckstände in einem Brennstoffzellensystem nach Anspruch 1, **dadurch gekennzeichnet, dass** das Brennstoffzellensystem Mittel (109) umfasst, um einen anodenseitigen (100) Dauerumlaufstrom von Reaktanden durchzuführen.

10. Verfahren, um Leckstände in einem Brennstoffzellensystem zu bestimmen, wobei in dem Verfahren dem Brennstoffzellensystem Brennstoff zugeführt wird, Informationen über den Brennstoffzellenstrom erhalten werden und wobei in dem Verfahren Restgas von der Anodenseite (100) in einem Nachbrenner (123) verbrannt wird, **dadurch gekennzeichnet, dass** in dem Verfahren die Temperatur in dem Nachbrenner (123) oder im Wesentlichen in der Nähe des Nachbrenners (123) gemessen wird, um Informationen über eine Temperaturveränderung beim Nachbrenner zu bilden, dass in dem Verfahren Informationen über die verbrauchte Sauerstoffmenge und über die verbrauchte Brennstoffmenge in den Brennstoffzellen (103) auf der Basis der Strominformationen bestimmt werden, dass Informationen über die Luftmenge in dem Nachbrenner (123) bestimmt werden, dass Informationen über die Veränderung der Restenthalpie auf der Basis der Informationen über die Temperaturveränderung beim Nachbrenner, der Informationen über die Luftmenge in dem Nachbrenner und auf der Basis der Informationen über die verbrauchte Brennstoffmenge in den Brennstoffzellen bestimmt werden, dass Informationen über die Enthalpie des Brennstoffeinsatzes und/oder Informationen über die Konzentration des Brennstoffeinsatzes auf der Basis der bestimmten Informationen über die Veränderung der Restenthalpie erhalten werden, und dass in dem Verfahren erste Informationen über den Methangehalt der Brennstoffzufuhr (117) bestimmt werden, indem die erhaltenen Informationen über die Enthalpie des Brennstoffeinsatzes und/oder die erhaltenen Informationen über die Konzentration des Brennstoffeinsatzes verwendet werden, dass der Einsatz des Brennstoffzellensystems auf der Basis der ersten Informationen des Methangehalts gesteuert wird, dass Flussinformationen über die Enthalpiezufuhr aus den Informationen gebildet werden, die gewonnen werden, indem eine oder mehrere der folgenden Verfahrensschritte durchgeführt werden: es wird eine Luftzufuhr in Messungen durchgeführt, um eine Luftzufuhr in Informationen zu bilden, es wird ein Wasserfluss in Messungen durchgeführt, um einen Wasserfluss in Informationen zu bilden, es wird eine Abführung des Abgases gemessen, um Informationen über die Abführung des Abgases zu bilden, es wird die elektrische Leistung gemessen, um Informationen über die Erzeugung elektrischer Energie zu bilden, es werden Temperaturbedingungen gemessen, um Wärmeinformationen des Brennstoffzellensystems zu bilden, und es werden Informationen über Wärmeverluste des Brennstoffzellensystems gebildet, und auf der Basis der gebildeten Enthalpiezufuhr in den Flussinformationen werden Informationen über Enthalpieflüsse durchgeführt, um Informationen über die Enthalpiebilanz des Brennstoffzellensystems bereitzustellen, indem die Informationen über die Enthalpieflüsse summiert werden und indem detektiert wird, dass die Summe aller aufsummierten Informationen der Enthalpieflüsse Null ergibt oder im Wesentlichen nahe bei Null liegt, wobei zweite Informationen über den Methangehalt der Brennstoffzufuhr auf der Basis der bereitgestellten Informationen über die Enthalpiebilanz bestimmt werden, und dass in dem Verfahren Informationen über Leckstände des Brennstoffzellensystems auf der Basis von Differenzen zwischen den ersten und den zweiten Informationen über den Methangehalt bestimmt werden, und dass in dem Verfahren eine genauere Steuerung des Brennstoffzellensystems auf der Basis der bestimmten Informationen über Leckstände durchgeführt wird.

11. Verfahren, um Leckstände in einem Brennstoffzellensystem nach Anspruch 10 zu bestimmen, **dadurch gekennzeichnet, dass** das Verfahren eine genauere Steuerung des Einsatzes des Brennstoffzellensystems durchführt, indem ein korrigierter Leckwert verwendet wird, der auf der Basis der bestimmten Informationen über Leckstände gebildet wird.

12. Verfahren, um Leckstände in einem Brennstoffzellensystem nach Anspruch 10 zu bestimmen, **dadurch gekennzeichnet, dass** in dem Verfahren Informationen über einen angepassteren Methangehalt der Brennstoffzufuhr (117) für eine genauere Steuerung der Brennstoffverwertung (FU) und/oder des Verhältnisses Sauerstoff zu Kohlenstoff (0/C) bestimmt werden.

13. Verfahren, um Leckstände in einem Brennstoffzellensystem nach Anspruch 10 zu bestimmen, **dadurch gekennzeichnet, dass** in dem Verfahren in dem Gasstrom in dem Brennstoffzellensystem Proben genommen werden, um Probeninformationen zu bilden, und dass der Gasstrom auf der Basis der gebildeten Probeninformationen verändert wird.

14. Verfahren, um Leckstände in einem Brennstoffzellensystem nach Anspruch 13 zu bestimmen, **dadurch gekennzeichnet, dass** in dem Verfahren aus dem Gasstrom in dem Brennstoffzellensystem diskrete Probenahmen durchgeführt werden, um Probeninformationen zu bilden.

15. Verfahren, um Leckstände in einem Brennstoffzellensystem nach Anspruch 13 zu bestimmen, **dadurch gekennzeichnet, dass** in dem Verfahren Informationen über die Veränderung der Restenthalpie bestimmt werden, indem ein erforderlicher Gasstrom aus dem Restgas von der Anodenseite (100) angesogen wird, um eine Gasprobe zu bilden, wobei die Gasprobe nach der Bildung verbrannt wird, und wobei die Informationen über die Veränderung der Restenthalpie des Restgases von der Anodenseite auf der Basis bekannter Beschränkungen und auf der Basis der Informationen über die Temperaturveränderung beim Nachbrenner berechnet werden.

16. Verfahren, um Leckstände in einem Brennstoffzellensystem nach Anspruch 10 zu bestimmen, **dadurch gekennzeichnet, dass** in dem Verfahren Spannungen der Brennstoffzelle gemessen werden, um Informationen über die gemessene Zellspannung zu bilden, dass ein erster Steuermechanismus durchgeführt wird, um Informationen der angenommenen Zusammensetzung des Einlassbrennstoffes zu bestimmen, um Informationen über die vorhergesagte Zellspannung zu bestimmen, und um einen Korrekturterm für die Informationen der angenommenen Zusammensetzung des Einlassbrennstoffes auf der Basis der Differenz zwischen den Informationen der gemessenen Zellspannung und den Informationen der vorhergesagten Zellspannung zu bestimmen, und in dem Verfahren wird mindestens ein dem ersten Steuermechanismus überlagerter Steuermechanismus (156, 158) verwendet, um mindestens hauptsächlich Steueroperationen vom Typ einer Abstimmungssteuerung durchzuführen, die eine andere Zeitkonstante zwischen den Steueroperationen verglichen mit den Steueroperationen des ersten Steuermechanismus aufweisen, wobei die Steueroperationen vom Typ einer Abstimmungssteuerung durchgeführt werden, um während des Startens oder während des Betriebs des Brennstoffzellensystems die Informationen der angenommenen Zusammensetzung des Einlassbrennstoffes mit der tatsächlichen Brennstoffzusammensetzung abzugleichen.

17. Verfahren, um Leckstände in einem Brennstoffzellensystem nach Anspruch 14 und 16 zu bestimmen, **dadurch gekennzeichnet, dass** in dem Verfahren mindestens ein dem ersten Steuermechanismus überlagerter Steuerme-

**EP 2 870 651 B1**

chanismus (156, 158) verwendet wird, um mindestens hauptsächlich Steueroperationen vom Typ einer Abstimmungssteuerung durchzuführen, die eine andere Zeitkonstante zwischen den Steueroperationen verglichen mit den Steueroperationen des ersten Steuermechanismus aufweisen, wobei die Steueroperationen vom Typ einer Abstimmungssteuerung durchgeführt werden, um während des Startens oder während des Betriebs des Brennstoffzellensystems die Informationen der angenommenen Zusammensetzung des Einlassbrennstoffes mit der tatsächlichen Brennstoffzusammensetzung zwischen den diskreten Steueroperationen abzugleichen.

18. Verfahren nach Anspruch 10, **dadurch gekennzeichnet, dass** in dem Verfahren ein anodenseitiger (100) Dauerumlaufstrom von Reaktanden durchgeführt wird.

## Revendications

1. Agencement pour la détermination de niveaux de fuite dans un système de pile à combustible, chaque pile à combustible dans le système de pile à combustible comprenant un côté anode (100), un côté cathode (102) et un électrolyte (104) entre le côté anode et le côté cathode, et le système de pile à combustible comprenant un moyen (117) pour fournir du combustible au système de pile à combustible, un moyen (126) pour obtenir des informations en cours sur la pile à combustible (103) et un brûleur de post-combustion (123) pour brûler des gaz résiduels du côté anode (100), **caractérisé en ce que** l'agencement comprend un moyen (125) pour mesurer la température dans le brûleur de post-combustion (123) ou essentiellement près du brûleur de post-combustion (123) pour constituer des informations de modification de la température du brûleur de post-combustion, un moyen (127) pour déterminer des informations sur la quantité d'oxygène consommée et la quantité de combustible consumé dans les piles à combustible (103) en se basant sur les informations en cours, un moyen pour déterminer des informations sur la quantité d'air dans le brûleur de post-combustion (123), un moyen (133) pour déterminer des informations de modification de l'enthalpie résiduelle en se basant sur les informations de modification de la température du brûleur de post-combustion, les informations sur la quantité d'air dans le brûleur de post-combustion, et en se basant sur les informations sur la quantité de combustible consumé dans les piles à combustible, un premier moyen d'information (120a) pour obtenir au moins une d'informations d'enthalpie de fourniture de combustible et d'informations de concentration de fourniture de combustible en se basant sur les informations de modification d'enthalpie résiduelle déterminées, le premier moyen d'information (120a) étant configuré pour déterminer des premières informations de teneur en méthane dans la fourniture de combustible (117) en utilisant lesdites au moins informations d'enthalpie de fourniture de combustible et informations de concentration de fourniture de combustible obtenues, et l'agencement comprend un moyen (140) pour contrôler l'alimentation du système de pile à combustible en se basant sur les premières informations de teneur en méthane déterminées par le premier moyen d'information (120a), un second moyen d'information (120b) pour fournir des informations d'équilibre d'enthalpie du système de pile à combustible en se basant sur les informations de flux d'enthalpie réalisées en utilisant des informations de flux de fourniture d'enthalpie fournies par un ou plusieurs des moyens suivants : le moyen (122) pour mesurer la fourniture d'air pour constituer des informations de fourniture d'air, le moyen (124) pour effectuer des mesures d'entrée d'eau pour constituer des informations d'entrée d'eau, le moyen (126) pour fournir des informations de sortie d'échappement, le moyen (128) de mesure pour constituer des informations de production de puissance électrique, le moyen (130) de mesure pour constituer des informations de chauffage du système de pile à combustible, et le moyen (134) pour déterminer des informations de perte thermique du système de pile à combustible, et l'agencement comprend le second moyen d'information (120b) pour déterminer l'équilibre d'enthalpie du système de pile à combustible en détectant que la somme du total des informations des flux d'enthalpie est de zéro ou essentiellement proche de zéro, le second moyen d'information (120b) étant configuré pour déterminer des secondes informations de teneur en méthane de la fourniture de combustible en se basant sur les informations d'équilibre d'enthalpie fournies, et l'agencement comprend un moyen (120) pour déterminer des informations de niveaux de fuite du système de pile à combustible en se basant sur des différences entre les premières et secondes informations de teneur en méthane, et le moyen (140) pour effectuer un contrôle plus précis du système de pile à combustible en se basant sur les informations de niveaux de fuite déterminées.

2. Agencement pour la détermination de niveaux de fuite dans un système de pile à combustible selon la revendication 1, **caractérisé en ce que** l'agencement comprend un moyen (140) pour un contrôle précis de l'alimentation du système de pile à combustible en utilisant une valeur de fuite corrigée constituée en se basant sur les informations de niveaux de fuite déterminées.

3. Agencement pour la détermination de niveaux de fuite dans un système de pile à combustible selon la revendication 1, **caractérisé en ce que** l'agencement est configuré pour déterminer des informations de teneur en méthane plus ajustées de la fourniture de combustible (117) par au moins un des moyens (120a, 120b) pour un contrôle plus précis d'au moins un de l'utilisation du combustible (FU) et du rapport oxygène/carbone (O/C) dans le système de pile à combustible.

4. Agencement pour la détermination de niveaux de fuite dans un système de pile à combustible selon la revendication 1, **caractérisé en ce que** l'agencement comprend un moyen (133) pour échantillonner un flux gazeux dans le système de pile à combustible pour constituer des informations d'échantillon, et un moyen (140) pour modifier le flux gazeux en se basant sur les informations d'échantillon constituées.

5. Agencement pour la détermination de niveaux de fuite dans un système de pile à combustible selon la revendication 4, **caractérisé en ce que** l'agencement comprend un moyen (133) pour effectuer des opérations d'échantillonnage discret du flux gazeux dans le système de pile à combustible pour constituer des informations d'échantillon.

6. Agencement pour la détermination de niveaux de fuite dans un système de pile à combustible selon la revendication 1, **caractérisé en ce que** le moyen (133) pour déterminer des informations de modification d'enthalpie résiduelle comprend un réglage microcalorimétrique qui comprend au moins un éjecteur (132) pour aspirer le flux gazeux requis des gaz résiduels du côté anode (100) et le flux d'air requis dans une chambre de catalyseur (130) pour constituer un échantillon gazeux, et un catalyseur miniature (131) pour brûler l'échantillon gazeux, et le moyen (133) comprend une unité de processeur (133) pour calculer des informations de modification d'enthalpie résiduelle des gaz résiduels du côté anode en se basant sur les proportions de flux gazeux et d'air connues, et les informations de modification de la température du brûleur de post-combustion.

7. Agencement pour la détermination de niveaux de fuite dans un système de pile à combustible selon la revendication 1, **caractérisé en ce que** l'agencement comprend un moyen (115) pour mesurer des tensions de pile à combustible pour constituer des informations de tension de pile mesurées et un premier mécanisme de contrôle, qui est agencé par le moyen (150) pour déterminer des informations de composition de combustible fourni supposées, un moyen (152) pour déterminer des informations de tension de pile prévues, et un moyen (154) pour déterminer un terme de correction des informations de composition de combustible fourni supposées en se basant sur la différence entre les informations de tension de pile mesurées et les informations de tension de pile prévues, et l'agencement comprend au moins un mécanisme de contrôle (156, 158) superposé au premier mécanisme de contrôle pour effectuer au moins principalement des opérations de contrôle du type de réglage, qui ont une constante de temps distincte entre des opérations de contrôle comparées aux opérations de contrôle du premier mécanisme de contrôle, les opérations de contrôle du type de réglage étant effectuées pour faire correspondre les informations de composition de combustible fourni supposées avec la composition réelle du combustible pendant le démarrage ou le fonctionnement du système de pile à combustible.

8. Agencement pour la détermination de niveaux de fuite dans un système de pile à combustible selon les revendications 5 et 7, **caractérisé en ce que** l'agencement comprend l'au moins un mécanisme de contrôle (156, 158) superposé au premier mécanisme de contrôle pour effectuer au moins principalement des opérations de contrôle du type de réglage qui ont une constante de temps distincte entre des opérations de contrôle comparées aux opérations de contrôle du premier mécanisme de contrôle, les opérations de contrôle du type de réglage étant effectuées pour faire correspondre les informations de composition de combustible fourni supposées avec la composition réelle du combustible entre les opérations d'échantillonnage discret pendant le démarrage ou le fonctionnement du système de pile à combustible.

9. Agencement pour la détermination de niveaux de fuite dans un système de pile à combustible selon la revendication 1, **caractérisé en ce que** le système de pile à combustible comprend un moyen (109) pour effectuer un flux de recirculation de réactifs côté anode (100).

10. Procédé pour la détermination de niveaux de fuite dans un système de pile à combustible, dans lequel procédé, du combustible est fourni au système de pile à combustible, des informations en cours sur la pile à combustible sont obtenues et les gaz résiduels du côté anode (100) sont brûlés dans un brûleur de post-combustion (123), **caractérisé en ce que** la température dans le brûleur de post-combustion (123) ou essentiellement près du brûleur de post-combustion (123) est mesurée dans le procédé pour constituer des informations de modification de la température du brûleur de post-combustion, des informations sur la quantité d'oxygène consommée et sur la quantité de combustible consumé dans les piles à combustible (103) sont déterminées en se basant sur les informations en cours, des informations sur la quantité d'air dans le brûleur de post-combustion (123) sont déterminées, des informations de modification de l'enthalpie résiduelle sont déterminées en se basant sur les informations de modification de la température du brûleur de post-combustion, les informations sur la quantité d'air dans le brûleur de post-combustion, et en se basant sur les informations sur la quantité de combustible consumé dans les piles à combustible, au moins une des informations d'enthalpie de fourniture de combustible et des informations de concentration de fourniture de combustible est obtenue en se basant sur les informations de modification d'enthalpie résiduelle, des premières informations de teneur en méthane dans la fourniture de combustible (117) sont déterminées dans le procédé en utilisant lesdites au moins informations d'enthalpie de fourniture de combustible et informations de concentration de fourniture de combustible obtenues, l'alimentation du système de pile à combustible est contrôlée en se basant sur les premières informations de teneur en méthane, des informations de flux de fourniture d'enthalpie sont constituées à partir des informations obtenues en effectuant une ou plusieurs des étapes de procédé suivantes : des mesures de fourniture d'air sont effectuées pour constituer des informations de fourniture d'air, des mesures d'entrée d'eau sont effectuées pour constituer des informations d'entrée d'eau, des sorties d'échappement sont mesurées pour constituer des informations de sortie d'échappement, la puissance électrique est mesurée pour constituer des informations de production de puissance électrique, les conditions de température sont mesurées pour constituer des informations de chauffage du système de pile à combustible, et des informations de perte thermique du système de pile à combustible sont constituées, et en se basant sur les informations de flux de fourniture d'enthalpie constituées, des informations de flux d'enthalpie sont constituées pour fournir des informations d'équilibre d'enthalpie du système de pile à combustible en effectuant le total des informations des flux d'enthalpie et en détectant que la somme du total des informations des flux d'enthalpie est de zéro ou essentiellement proche de zéro, des secondes informations de teneur en méthane de la fourniture de combustible étant déterminées en se basant sur les informations d'équilibre d'enthalpie fournies, et des informations de niveaux de fuite du système de pile à combustible sont déterminées dans le procédé en se basant sur les différences entre les premières et secondes informations de teneur en méthane, et un contrôle plus précis du système de pile à combustible est effectué en se basant sur les informations de niveaux de fuite déterminées.

11. Procédé pour la détermination de niveaux de fuite dans un système de pile à combustible selon la revendication 10, **caractérisé en ce qu'**un contrôle précis de l'alimentation du système de pile à combustible est effectué dans le procédé, en utilisant une valeur de fuite corrigée constituée en se basant sur les informations de niveaux de fuite déterminées.

12. Procédé pour la détermination de niveaux de fuite dans un système de pile à combustible selon la revendication 10, **caractérisé en ce que** plusieurs informations de la teneur en méthane ajustées de la fourniture de combustible (117) sont déterminées dans le procédé pour un contrôle plus précis d'au moins un de l'utilisation du combustible (FU) et du rapport oxygène/carbone (O/C) dans le système de pile à combustible .

13. Procédé pour la détermination de niveaux de fuite dans un système de pile à combustible selon la revendication 10, **caractérisé en ce qu'**un flux gazeux dans le système de pile à combustible est échantillonné dans le procédé pour constituer des informations d'échantillon, et le flux gazeux est modifié en se basant sur les informations d'échantillon constituées.

14. Procédé pour la détermination de niveaux de fuite dans un système de pile à combustible selon la revendication 13, **caractérisé en ce que** des opérations d'échantillonnage discret du flux gazeux dans le système de pile à combustible sont effectuées dans le procédé pour constituer des informations d'échantillon.

15. Procédé pour la détermination de niveaux de fuite dans un système de pile à combustible selon la revendication 13, **caractérisé en ce que** des informations de modification d'enthalpie résiduelle sont déterminées dans le procédé en aspirant le flux gazeux requis des gaz résiduels du côté anode (100) pour constituer un échantillon gazeux, l'échantillon gazeux étant brûlé après la formation, et des informations de modification d'enthalpie résiduelle des gaz résiduels du côté anode sont calculées en se basant sur des restrictions connues, et les informations de modification de la température du brûleur de post-combustion.

16. Procédé pour la détermination de niveaux de fuite dans un système de pile à combustible selon la revendication 10, **caractérisé en ce que** des tensions de pile à combustible sont mesurées dans le procédé pour constituer des informations de tension de pile, qu'un premier mécanisme de contrôle est effectué pour déterminer des informations de composition de combustible fourni supposées, pour déterminer des informations de tension de pile prévues, et pour déterminer un terme de correction des informations de composition de combustible fourni supposées en se basant sur la différence entre les informations de tension de pile mesurées et les informations de tension de pile prévues, et au moins un mécanisme de contrôle (156, 158) superposé au premier mécanisme de contrôle est utilisé dans le procédé pour effectuer au moins principalement des opérations de contrôle du type de réglage, qui ont une constante de temps distincte entre des opérations de contrôle comparées aux opérations de contrôle du premier mécanisme de contrôle, les opérations de contrôle du type de réglage étant effectuées pour faire correspondre les informations de composition de combustible fourni supposées avec la composition réelle du combustible pendant le démarrage ou le fonctionnement du système de pile à combustible.

17. Procédé pour la détermination de niveaux de fuite dans un système de pile à combustible selon les revendications 14 et 16, **caractérisé en ce qu'**au moins un mécanisme de contrôle (156, 158) superposé au premier mécanisme de contrôle est utilisé pour effectuer au moins principalement des opérations de contrôle du type de réglage qui ont une constante de temps distincte entre des opérations de contrôle comparées aux opérations de contrôle du premier mécanisme de contrôle, les opérations de contrôle du type de réglage étant effectuées pour faire correspondre les informations de composition de combustible fourni supposées avec la composition réelle du combustible entre les opérations d'échantillonnage discret pendant le démarrage ou le fonctionnement du système de pile à combustible.

18. Procédé selon la revendication 10, **caractérisé en ce qu'**un flux de recirculation de réactifs côté anode (100) est effectué dans le procédé.

*Fig. 1*

Fig. 2

EP 2 870 651 B1

Fig. 3

Fig. 4

**To exhaust**

**121**   **125**   **125**

**131**

Air in

**138**

Fuel in

**132**

Heated block

Oxidation catalyst

**130**

High pressure N2 in

Fig. 5

Fig. 6

Fig. 7

EP 2 870 651 B1